(19)

Europäisches Patentamt
European Patent Office
Office européen des brevets

(11) **EP 1 818 569 A1**

(12) **EUROPEAN PATENT APPLICATION**
published in accordance with Art. 158(3) EPC

(43) Date of publication:
**15.08.2007 Bulletin 2007/33**

(51) Int Cl.:
***F16H 1/28*** (2006.01)

(21) Application number: **05793152.9**

(22) Date of filing: **12.10.2005**

(86) International application number:
**PCT/JP2005/018811**

(87) International publication number:
**WO 2006/041105 (20.04.2006 Gazette 2006/16)**

(84) Designated Contracting States:
**DE FR GB**

(30) Priority: **13.10.2004 JP 2004298642**

(71) Applicant: **Calsonic Kansei Corporation
Tokyo 164-8602 (JP)**

(72) Inventors:
• **SHIMAMURA, Yuzo
5-chome, Nakano-ku, Tokyo;1648602 (JP)**

• **HIROTA, Yukitsugu
5-chome, Nakano-ku, Tokyo;16486 02 (JP)**
• **NAGANO, Masaharu
5-chome, Nakano-ku, Tokyo;164860 2 (JP)**
• **KIDOKORO, Hitoshi
a-ku, Yokohama-shi, Kanagawa;210023 (JP)**

(74) Representative: **Grünecker, Kinkeldey,
Stockmair & Schwanhäusser
Anwaltssozietät
Maximilianstrasse 58
80538 München (DE)**

(54) **OPERATING RANGE SELECTION MECHANISM OF AUTOMATIC TRANSMISSION, AUTOMATIC TRANSMISSION UNIT WITH THE OPERATING RANGE SELECTION MECHANISM, AND VEHICLE**

(57)      An operation range selection mechanism of an automatic transmission 100 according to the present invention includes an input operation force detector 21 that detects an operation force generated by an operation applied to a select lever 2, an assist actuator 9 that adds an assist force to the select lever 2 to carry out an operation assist for the select lever 2, and an assist force control device 22 that controls the assist actuator 9 to start the operation assist for the select lever 2 upon the value of the operation force detected by the input operation force detector 21 being equal to or more than a predetermined value. The assist force control device 22 stops the operation assist upon the operation force being less than the predetermined value or the select lever 2 having reached a predetermined position, and then temporarily sets the predetermined value to a higher value.

FIG.1

| | |
|---|---|
| 2 | SELECT LEVER |
| 9 | ASSIST ACTUATOR |
| 21 | TORQUE SENSOR |
| 22 | ASSIST CONTROL UNIT |
| 25 | POTENTIOMETER |

P RANGE: STOP
R RANGE: REVERSE
N RANGE: NEUTRAL
D RANGE: FORWARD
L RANGE: FORWARD (LOW GEAR)

EP 1 818 569 A1

**Description**

**TECHNICAL FIELD**

The present invention relates to an operation range selection mechanism for an automatic transmission which carries out an operation assist for a select lever operated by a driver.

**BACKGROUND ART**

In the automatic transmission for an automobile, there has been proposed an operation range selection mechanism for an automatic transmission which assists an operations of a select lever (operation lever, shift lever) carried out by a driver by means of a driving force such as that of a motor to reduce a load of the operating the select lever, and to realize a short stroke of a shift device including the select lever (refer to Patent Document 1).

Patent Document: Japanese Patent Laid-Open Publication (Kokai) No. 2003-4135

A general operation range selection mechanism has such a structure that a torque sensor detects a torque value (operation force) applied to a select lever, and a motor or the like is actuated to carry out an operation assist for the select lever if the detected torque value is equal to or more than a predetermined value.

However, there is such a problem for the operation range selection mechanism having the above structure that even after a driver has finished the operation of the select lever, and releases the hand from the select lever, the torque sensor may detect an inertia force of the select lever, and may continue the operation assist for the select lever.

Moreover, the operation range selection mechanism structured as described above generally detects an operation direction of the select lever by calculating a motion displacement of the select lever. As a result, if the driver applies a force to the select lever, the select lever does not move, and the motion displacement is not calculated, it is not possible to identify the direction of the operation assist, and the operation assist for the select lever is not carried out. It should be noted that the "operation range selection mechanism" as described above serves to assist the selection operation by the driver when the driver uses the select lever to select an operation range of the automatic transmission, and is also referred to as "select assist mechanism" and "operation range selection operation assist mechanism".

DISCLOSURE OF THE INVENTION

The present invention has been devised in view of the foregoing problems, and has a first object to provide an operation range selection mechanism for an automatic transmission which prevents a torque sensor from detecting an inertia force of a select lever, thereby preventing an operation assist for the select lever from continuing even after a driver release the hand from the select lever. The present invention has a second object to provide an operation range selection mechanism for an automatic transmission which can carry out an operation assist even if a select lever is not displaced, but a force is being applied to the select lever.

In order to achieve the above objects, this invention provides an operation range selection mechanism (operation range selection operation assist mechanism) used for an automatic transmission including a plurality of operation ranges selected by a select lever, including an input operation force detector that detects an operation force generated by an operation applied to the select lever, an assist actuator that adds an assist force to the select lever to carry out an operation assist for the select lever, and an assist force control device that controls the assist actuator to start the operation assist for the select lever upon the value of the operation force detected by the input operation force detector being equal to or more than a predetermined value, where the assist force control device stops the operation assist upon the operation force being less than the predetermined value or the select lever having reached a predetermined position, and then temporarily sets the predetermined value to a higher value.

Moreover, the assist force control device may stop the operation assist upon the operation force being less than the predetermined value or the select lever having reached a predetermined position, and may then temporarily apply filtering by means of a low pass filter to the detected value of the operation force to control the assist actuator based on the filtered operation force.

Moreover, an operation range selection mechanism for an automatic transmission according to the present invention includes an input operation force detector that detects an operation force generated by an operation applied to the select lever, an assist actuator that adds an assist force to the select lever to carry out an operation assist for the select lever, and an assist force control device that, upon a value of the operation force detected by the input operation force detector is equal to or more than a first predetermined value, determines that an operation position of the select lever is moved toward a first neighboring shift position, and controls the' assist actuator to start an operation assist for the select lever toward the first shift position, and, upon the value of the operation force detected by the input operation force detector is equal to or less than a second predetermined value, determines that the operation position of the select lever is moved toward a second neighboring shift position located opposite to the first shift position, and controls the assist actuator to start an operation assist for the select lever toward the second shift position.

Another object of the present invention is to provide an automatic transmission unit including an automatic transmission, and either one of the above operation range selection mechanism.

Another object of the present invention is to provide an automobile including either one of the above operation range selection mechanism.

According to the operation range selection mechanism for an automatic transmission according to the present invention, since the assist force control device stops the operation assist upon the operation force being less than the predetermined value or the select lever having reached a predetermined position, and then temporarily sets the predetermined value to a higher value, even if the torque value is temporarily increased by the torque resulting from the inertia after the operation assist is finished, the value of the operation force hardly exceeds the predetermined value, and it is thus possible to easily prevent the operation assist from continuing.

Moreover, since the assist force control device stops the operation assist upon the operation force being less than the predetermined value or the select lever having reached a predetermined position, and then applies filtering by means of the low pass filter to the detected value of the operation force, the operation force is reduced, the value of the operation force hardly exceeds the predetermined value, and it is thus possible to easily prevent the operation assist from continuing.

Further, according to the operation range selection mechanism according to the present invention, since the assist force control device that, upon the value of the operation force is equal to or more than the first predetermined value, determines that an operation position of the select lever is moved toward a first neighboring shift position, and starts the operation assist for the select lever toward the first shift position, and, upon the value of the operation force is equal to or less than the second predetermined value, determines that the operation position of the select lever is moved toward a second neighboring shift position located opposite to the first shift position, and starts the operation assist for the select lever toward the second shift position, even if the select lever is not moved, but an operation force is being applied to the select lever, the operation assist can be carried out, resulting in a stable operation assist surely reflecting an intention of a driver.

The present application claims priority based on Japanese Patent Application No. 2004-298642 filed on October 13, 2004, the entire contents of which are incorporated herein by reference.

BRIEF DESCRIPTION OF THE DRAWINGS

FIG. 1 is a schematic view showing a configuration of the automatic transmission;
FIG. 2 is a perspective view showing a structure in detail of an assist actuator;
FIG. 3 is a block diagram showing an assist control unit;
FIG. 4 is a perspective view showing a detent structure of an automatic transmission unit;
FIG. 5 is a flowchart showing an assist process for a select lever by the assist control unit;
FIG. 6 shows a temporal change of a torque value detected by a torque sensor when the select lever is operated from a P position to an R position;
FIG. 7 is a flowchart showing a process for temporarily changing a threshold when a torque is generated resulting from an inertia;
FIG. 8 shows an arithmetic operation circuit for temporarily changing the threshold when a torque is generated resulting from an inertia;
FIG. 9 shows state transition of the flowchart shown in FIG. 7;
FIG. 10 shows a temporal change of the threshold;
FIG. 11 shows a temporal change of a value obtained by filtering the torque value detected by the torque sensor when the select lever is operated from the P position to the R position;
FIG. 12 is a flowchart showing filtering applied to the torque value detected by the torque sensor when a torque is generated resulting from an inertia;
FIG. 13 is a block diagram showing an assist control unit according to a second embodiment;
FIG. 14 is a flowchart showing the operation assist process by the assist control unit according to the second embodiment;
FIG. 15 is a state transition diagram of the assist control unit according to the second embodiment;
FIG. 16 is a chart showing a temporal change of the torque value according to the second embodiment;
FIG. 17 is a flowchart showing the operation assist process by the assist control unit according to a third embodiment;
FIG. 18 is a state transition diagram of the assist control unit according to the third embodiment;

FIG. 19A is a chart showing a temporal change of the torque value according to the third embodiment for a case where the torque value is exceeding a first threshold;

FIG. 19B is a chart showing a temporal change of the torque value according to the third embodiment for a case where the torque value is exceeding a second threshold;

FIG. 20 is a chart showing a temporal change of the torque value according to the third embodiment for a case where the second threshold is not set to a K-time value;

FIG. 21 is a chart showing a temporal change of the torque value according to the third embodiment for a case where the second threshold is set to the K-time value;

FIG. 22 is a flowchart showing the operation assist process by the assist control unit according to a fourth embodiment; and

FIG. 23 is a state transition diagram of the assist control unit according to the fourth embodiment.

EXPLANATION OF REFERENCE NUMERALS

| 1 | SELECT UNIT |
| 9: | ASSIST ACTUATOR |
| 19: | AUTOMATIC TRANSMISSION UNIT |
| 21: | TORQUE SENSOR (INPUT OPERATION FORCE DETECTOR) |
| 22, 22a: | ASSIST CONTROL UNIT (ASSIST FORCE CONTROL DEVICE) |
| 25: | POTENTIOMETER |
| 100: | AUTOMATIC TRANSMISSION |

**BEST MODE FOR CARRYING OUT THE INVENTION**

A description will now be given of automatic transmissions provided with an operation range selection mechanism according to the present invention with reference to drawings.

First Embodiment

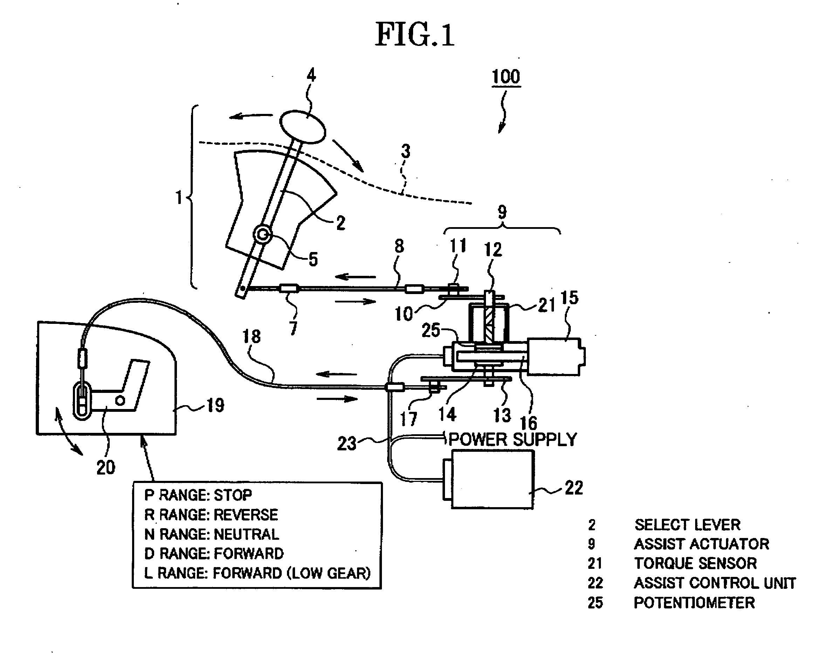

As shown in FIG. 1, an automatic transmission 100 includes a select unit 1, a control cable 8, an assist actuator 9, a control cable 18, an automatic transmission unit 19, and an assist control unit (assist force control device) 22.

The select unit 1 includes a select lover 2 operated by a driver, and is provided in a center cluster 3 by a driver seat. A select knob 4 gripped by the driver during a select operation is provided on a top end of the select lever 2. The select lever 2 is operated rotationally about a fulcrum shaft 5.

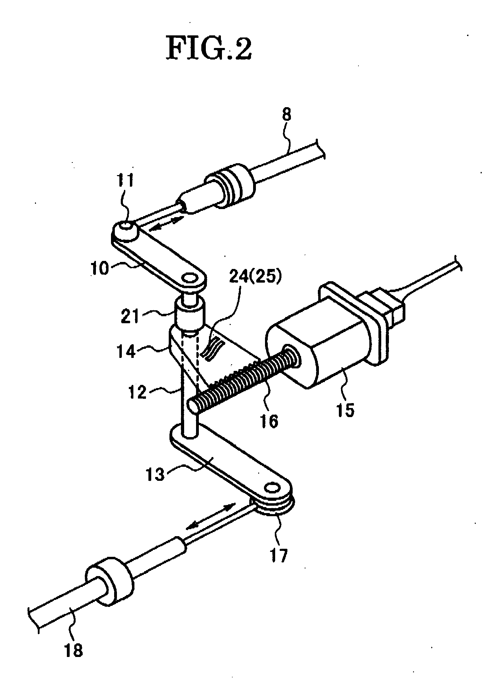

A control cable 8 of a push-pull type is connected to a bottom end portion of the select lever 2 via a select lever joint 7. The control cable 8 is rotationally connected to an input lever 10 of the assist actuator 9 via an input lever joint 11 as shown in FIG. 2. Namely, a rotational motion of the select lever 2 is converted into a linear motion, and an operation force generated by the operation of the select lever 2 is transmitted to the input lever 10.

The input lever 10 is connected to an output lever 13 via an output shaft 12 rotationally provided. A worm gear 14 is provided on the output shaft 12, and meshes with a motor output shaft 16 of an electric motor 15 provided with a speed reduction mechanism.

A control cable 18 of a push-pull type is connected to the output lever 13 via an output lever joint 17. The control cable 18 is connected to a control arm 20 of the automatic transmission unit 19. Namely, the control cable 18 converts a rotational motion of the output lever 13 into a linear motion, and a resultant force of the operation force of the driver and a driving force of the electric motor 15 is transmitted to the control arm 20 of the automatic transmission unit 19.

A torque sensor (input operation force detector) 21 for detecting a strain (torsion) generated between the input lever 10 and the worm gear 14 is provided on the output shaft 12. A signal of the operation force detected by this torque sensor 21 is amplified by an amplifier, not shown, and is transmitted to the assist control unit 22 via a wiring harness 23. The operation force generated by the select lever operation can be estimated based on the detection signal from the torque sensor 21.

A contact 24 for detecting a position is fixed on the worm gear 14. This contact 24 rotates along with the worm gear 14, and electrically comes in contact with a carbon resistor printed on a board, not shown, thereby outputting a voltage signal according to a stroke angle of the select lever 2 to the assist control unit 22. This contact 24 and the carbon resistor constitute a potentiometer (operation position detector) 25.

The potentiometer 25 detects the stroke angle of the select lever 2 at any time as an angle while the angle of the select lever 2 at a P range is considered as a reference angle.

The assist control unit 22 sets a target assist force based on the detected stroke angle of the select lever 2 and the operation force of the driver, and applies PWM control to an output duty ratio of the electric motor 15.

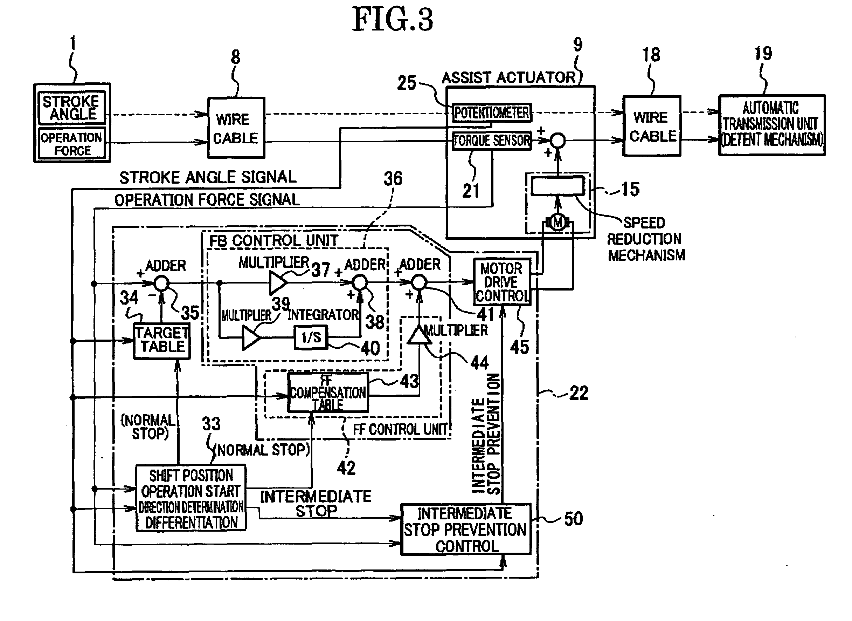

FIG. 3 is a block diagram showing a configuration of the assist control unit 22. In the select unit 1, a change in the stroke of the select lever 2 upon an operation to switch an operation range is input to the potentiometer 25 of the assist actuator 9 via the control cable 8. The potentiometer 25 detects the stroke angle according to the amount of the operation of the select lever 2, and the detected stroke angle is output to the assist control unit 22 as a stroke angle signal.

Moreover, the operation force applied to the select lever 2 is input to the torque sensor 21 of the assist actuator 9 via the control cable 8. The torque sensor 21 detects the operation force applied to the select lever 2, and outputs the detected operation force as the operation force signal to the assist control unit 22.

A position/operation start/direction determination block 33 determines present stroke angle of the select lever 2 based on the stroke angle signal. Moreover, the position/operation start/direction determination block 33 determines an operation start and an operation direction (an operation speed and an operation acceleration as well, if necessary) of the select lever 2 based on the stroke angle signal, a derivative of the stroke angle signal, and the operation force signal, and outputs results of the determination to an FF compensation table 43, a target table block 34, and a motor drive control block 45.

Moreover, if the position/operation start/direction determination block 33 determines an intermediate stop, it outputs an intermediate stop signal to an intermediate stop prevention block 50.

The target table block 34 calculates a target operation reaction force according to the stroke angle of the select lever 2 based on the stroke angle signal and the operation direction of the select lever 2 and the like obtained by the position/operation start/direction determination block 33, and outputs the target operation reaction force to an adder 35.

On this occasion, the target operation reaction force changes according to the stroke angle of the select lever 2, and the target table block 34 thus stores target operation reaction forces for respective stroke angles in a tabular form.

The adder 35 calculates a deviation of the operation force signal from the target operation reaction force, and outputs the calculated result to an FB control unit 36.

The FB control unit 36 includes a multiplier 37, an adder 38, a multiplier 39, and an integrator 40. The multiplier 37 outputs a value obtained by multiplying the deviation of the operation force signal from the target operation reaction force by a proportional gain (proportional output) to the adder 38. The multiplier 39 outputs a value obtained by multiplying the deviation of the operation force signal from the target operation reaction force by an integral gain to the integrator 40. The integrator 40 integrates the output from the multiplier 39, and outputs a result of the integration to the adder 38 (integral output). The adder 38 outputs a feedback assist force, which is a sum of the proportional output and the integral output, to the adder 41.

The FF control unit 42 includes an FF compensation table 43 and a multiplier 44. The FF compensation table 43 outputs a value set in advance in correspondence to the stroke angle signal, the operation speed, and the operation acceleration to the multiplier 44. The multiplier 44 outputs a value obtained by multiplying an FF assist force by an FF gain, namely a feedforward assist force, to the adder 41.

The adder 41 outputs a sum of the output from the FB control unit 36 and the FF control unit 42 (feedback assist force + feedforward assist force), namely the target assist force, to the motor drive control block 45.

The motor drive control block 45 drives the electric motor 15 (speed reduction mechanism) based on the target assist force.

If the select lever 2 stops at an intermediate position, the intermediate stop prevention control block 50 calculates a value and a direction of a current supplied to the electric motor 15 in order to move the select lever 2 to a correct operation range position based on a system state calculated based on the input signals, and outputs the value and the direction of the current.

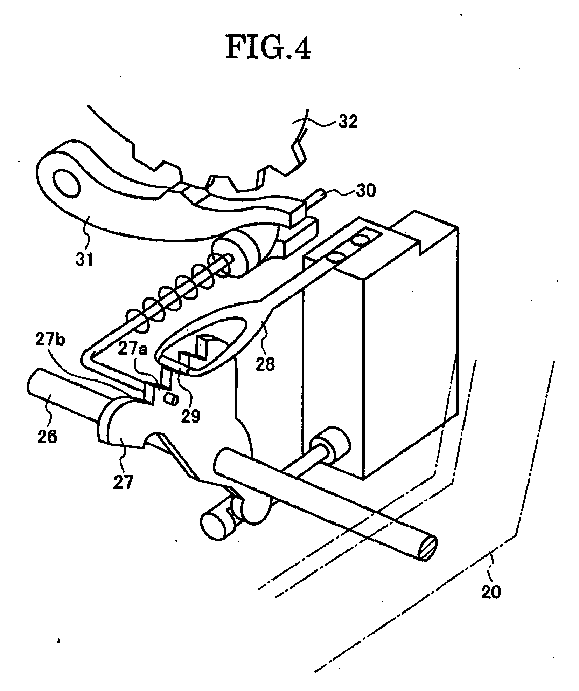

A description will now be given of a structure of a detent of the automatic transmission unit 19. A rotational shaft 26 is provided on the control arm 20 of the automatic transmission unit 19, and a detent plate 27 is supported by the rotational shaft 26 as shown in FIG. 4. Recesses 27b corresponding to five operation ranges (P, R, N, D, and L) are formed between cam protrusions 27a on a top end of the detent plate 27. Then, a detent pin 29 formed on a tip of a spring plate 28 is engaged with the recess 27b to maintain a selected operation range position, and an unintentional selection of an operation range position resulting from a vibration of the vehicle or the like is thus prevented.

Namely, the operation force applied to the select lever 2 rotates the rotational shaft 26, and the detent plate 27 moves relatively to the detent pin 29 in correspondence to this rotation. On this occasion, the detent pin 29 passes over the cam protrusion 27a, and then engages with the recess 27b corresponding to a next operation range, and the engaged state is maintained by an elastic force of the spring plate 28. This elastic force serves as a main load force when the select lever 2 is operated.

It should be noted that one end of a parking pole 30 is rotationally connected to the detent plate 27. When the select lever 2 is moved to the P range, this parking pole 30 prevents a parking gear 32 from rotating via a cam-shape plate 31 to lock drive wheels, which are not shown. As a result, when the vehicle is parked in the P range on a slope, a load of the vehicle weight is applied so as to lock the drive wheels according to the slope, which acts as a force clamping the parking pole 30.

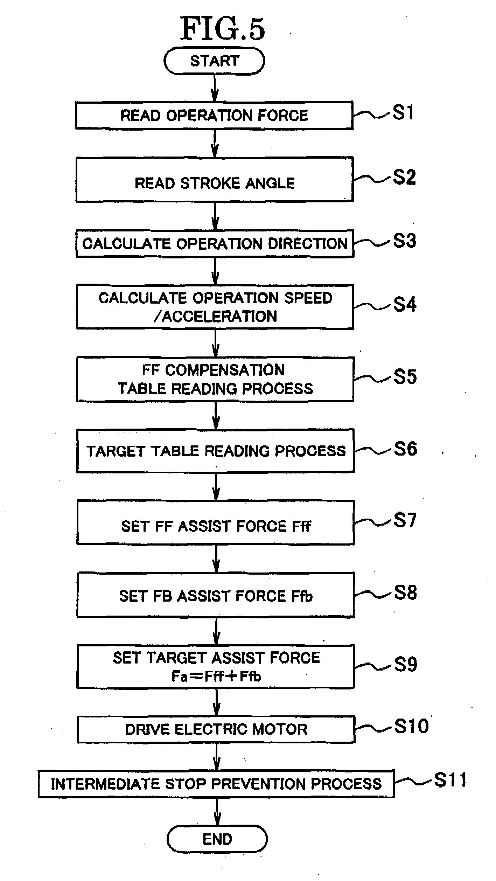

A description will now be given of an assist control process for the select lever 2 carried out in the assist control unit 22 with reference to a flowchart shown in FIG. 5.

The assist control unit 22 receives the operation force signal of the torque sensor 21, and reads in the operation force in a step S1. The assist control unit 22 then receives the stroke angle signal of the potentiometer 25, and reads in the stroke angle in a step S2. The assist control unit 22 then calculates the operation direction of the select lever 2 based on an increase or decrease of the stroke angle of the select lever 2 from a stroke angle read in the previous control cycle in a step S3.

The assist control unit 22 then calculates the operation speed of the select lever 2 based on a ratio of the change of the stroke angle from the stroke angle read in the previous control cycle, and calculates the operation acceleration of the select lever 2 based on the derivative of the operation speed in a step S4, and causes the assist control process to proceed to a step S5.

The assist control unit 22 carries out an FF compensation table reading process, and selects an optimal table according to the stroke angle, the operation speed, and the operation acceleration from multiple tables set in advance in the FF compensation table in the step S5.

The assist control unit 22 then carries out a target table reading process in a step S6, and sets an FF assist force based on the read FF compensation table (Fff setting) in a step S7, and causes the assist control process to proceed to a step S8.

The assist control unit 22 sets an FB assist force from the read target table (Ffb setting) in the step S8, and sets the target assist force from the sum of the set FF assist force and FB assist force in a step S9.

The assist control unit 22 then controls the output duty ratio of the electric motor 15 according to the target assist force in a step S10. The assist control unit 22 then determines whether the select lever 2 is stopped at an intermediate position between the correct operation range positions, and if the select lever 2 is stopped at an intermediate position, the assist control unit 22 carries out an intermediate position stop prevention process, which calculates the drive current and the drive direction of the electric motor, in order to return the select lever 2 to a correct operation range position, and finishes the control.

In this way, the assist control unit 22 determines the operation range position of the select lever 2, and assists the operation of the select lever 2, thereby reducing the operation load of the driver.

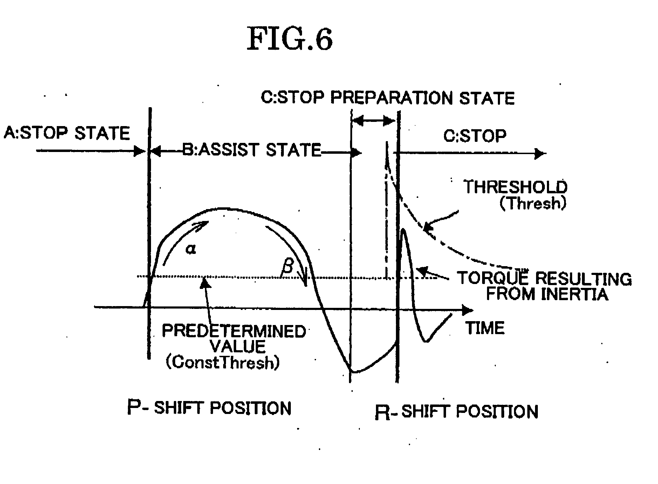

FIG. 6 shows a torque value detected by the torque sensor 21 when the select lever 2 is operated in a direction from a P position to an R position. When the select lever 2 is operated in the P·R direction, if the torque value exceeds a predetermined value (ConstThresh), the operation assist for the select lever 2 by the assist actuator 9 starts. The assist force by the assist actuator 9 and the operation force by the driver cause the torque value to gently increase (arrow a in FIG. 6), and the detent pin 29 is thus moved to a position passing over the cam protrusion 27a of the detent plate 27. After the detent pin 29 has passed the cam protrusion 27a, the detent pin 29 falls and is pulled into the next recess 27b, which generates an inertia force, the torque value rapidly decreases (arrow 8 in FIG. 6), the operation force becomes less than the predetermined value, and the operation assist by the assist actuator 9 is finished. It should be noted that the operation assist by the select actuator also stops if the select lever 2 reaches a predetermined position (R position in FIG. 6). The respective positions of the select lever correspond to the respective operation ranges of the automatic transmission. The P, R, N, D, and L positions of the select lever respectively correspond to the P, R, N, D, and L ranges of the automatic transmission.

However, if the detent pin 29 falls into the next recess 27b, the detent pin 29 which have gained a torque due to the inertia force abuts against an end surface of the next cam protrusion 27a, and the torque value thus temporarily increases (torque on this occasion is referred to as "torque resulting from inertia"), and then converges. This torque value resulting from the inertia exceeds the predetermined value (ConstThresh) as indicated by a dotted line in FIG. 6, and the assist actuator 9 may thus carry out the operation assist for the select lever 2 if the conventional configuration is still employed.

Thus, if the operation assist is stopped when the operation force has become less than the predetermined value, or the select lever 2 has reached a predetermined position, and a torque is then generated resulting from the inertia, the assist control unit 22 temporarily sets a torque value at which the assist actuator 9 starts the operation assist for the select lever 2 more than the predetermined value (this torque value is designated as a threshold (Thresh)), and then gradually decreases the threshold (Thresh) as indicated by a long dashed short dashed line in FIG. 6, thereby preventing an unnecessary operation assist.

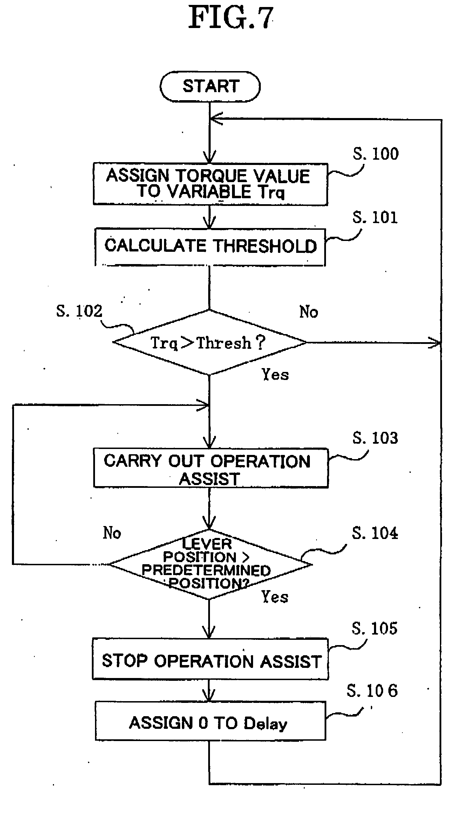

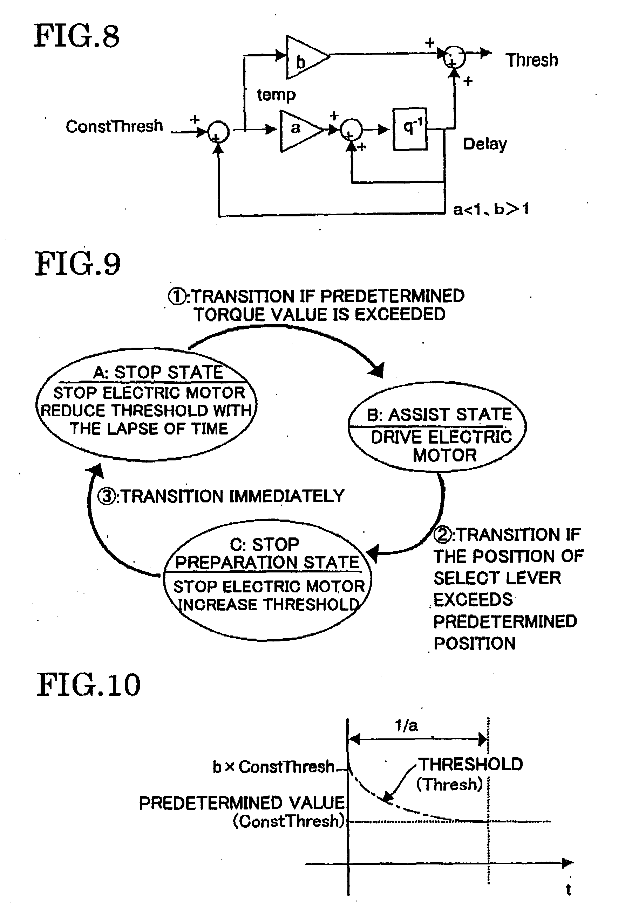

Specifically, the assist control unit 22 records the torque value detected by the torque sensor 21 as a variable Trq as indicated by a step S100 in FIG. 7. The assist control unit 22 then acquires the threshold (Thresh) which is changed from the predetermined value (ConstThreah) by means of an arithmetic operation circuit shown in FIG. 8 in a step S101.

Specifically, the threshold (Thresh) is obtained by assigning respective values to the following equations:

$$Temp = ConstThresh - Delay \ ... \ Equation\ 1$$

$$Thresh = Temp \times b - Delay \ ... \ Equation\ 2$$

$$Delay = Delay + Temp \times a \ ... \ Equation\ 3$$

where Delay and Temp are variables, and a and b are constants. It should be noted that an initial value is set to the variable Delay in advance, and $q^{-1}$ shown in FIG. 8 indicates a delay in sampling time.

The assist control unit 22 then compares Trq and Thresh with each other in a step S102. If Trq > Thresh does not hold, the assist control unit 22 returns the process to the step S100, and if Trq > Tresh holds, the assist control unit 22 starts the operation assist for the select lever 2 by means of the assist actuator 9 in a step S103. The process from the steps S100 to S102 is a process of "A: STOP STATE" before the operation assist for the select lever 2 by the assist actuator 9 is carried out as shown in FIG. 9, the threshold is reduced with the lapse of time by repeating the process in the step S101 through the loop from the steps S101 to S102 while the electric motor 15 is inactive.

If Trq > Thresh, the assist control unit 22 continues the operation assist for the select lever 2 by means of the assist actuator 9 until the select lever 2 is surely moved to the predetermined position, specifically until the detent pin 29 falls into the next recess 27b, and the select lever 2 is thus moved from the P position to the R position as shown in a step S104. The process from the step S103 to the step S104 is a "B: ASSIST STATE" process shown in FIG. 9, and specifically corresponds to the steps S1 to S11 shown in FIG. 5.

If the select lever 2 has moved to the R position, the assist control unit 22 finishes the operation assist for the select lever 2 by means of the assist actuator 9 in a step S105, and sets the value of Delay to 0 in a step S106. The assist control unit 22 then repeats again the process starting from the step S100. On this occasion, since the value of Delay is 0, there hold:

$$Temp = ConstThresh$$

according to the equation 1, and

$$Thresh = Temp \times b$$
$$= ConstThresh \times b$$

according to the equation 2 in the step S101, the value of the threshold (Thresh) rapidly increases to b times of the predetermined value (ConstThresh) immediately after the position of the select lever 2 has moved to the R position as shown in FIG. 10, and it is thus possible to prevent the torque value resulting from the inertia from exceeding the threshold (Thresh) for starting the operation assist for the select lever 2 by the assist actuator 9.

On the other hand, the value of Delay approaches the predetermined value (ConstThresh) every period of a times of Temp by repeating the process from the steps S100 to S102 as the equation 3 of Delay + Temp x a clearly shows, there thus finally hold Delay = ConstThresh, and Temp = 0, and the value of Thresh becomes equal to the value of ConstThresh. Namely, the threshold (Thresh) converges to the predetermined value (ConstThresh) at which the operation assist for the select lever 2 by the assist actuator 9 starts. A process in steps S105 and S106 is a process of "C: STOP PREPARATION STATE" shown in FIG. 9.

In this way, if the torque resulting from the inertia is generated, it is possible to prevent an unnecessary operation assist by causing the assist control unit 22 to temporarily increase the threshold (Thresh). Moreover, the threshold (Thresh) is subsequently decreased gradually, and when one wants to move the gear of the automatic transmission to the next position, one can easily carry out the operation assist by applying a more or less larger initial operation force to the select lever 2.

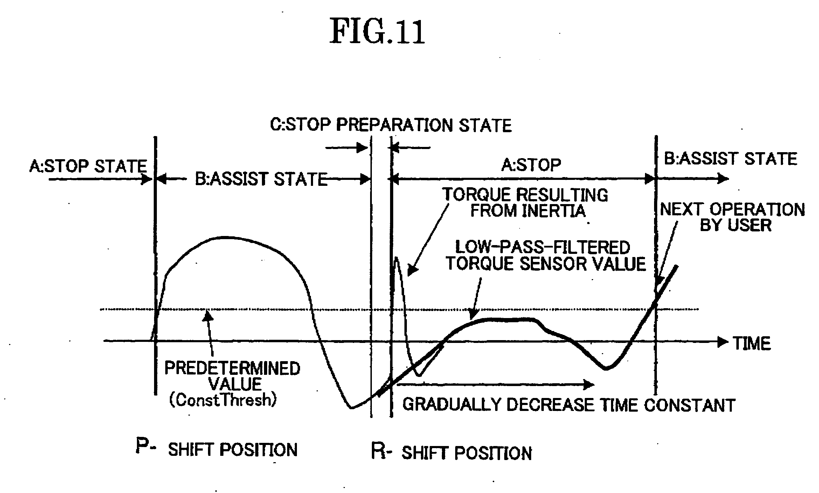

Moreover, as FIG. 11 shows, a method which reduces the torque value detected by the torque sensor 21 by means of a low pass filter after the stop of the operation assist for the select lever 2 by means of the assist actuator 9, and prevents the torque resulting from the inertia from exceeding the predetermined value (ConstThresh) is also effective.

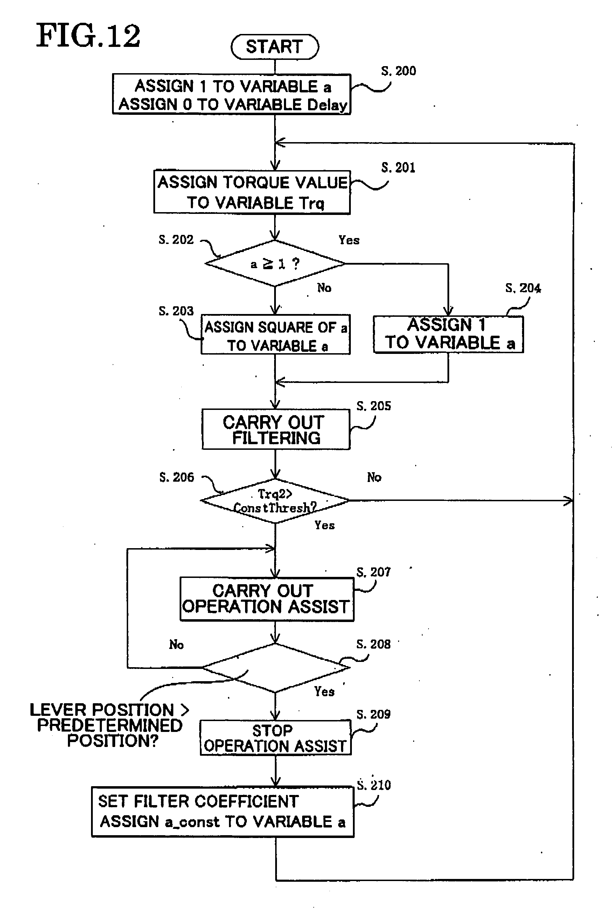

Specifically, the assist control unit 22 assigns 1 to the variable a, and assigns 0 to the variable Delay as initial values as shown in a step S200 in FIG. 12. The assist control unit 22 then records the torque value detected by the torque sensor 21 as the variable Trq in a step S201. Moreover, the assist control unit 22 determines whether the variable a is 1 or more in a step S202, if a is less than 1, the assist control unit 22 assigns the square of the variable a to the variable a in a step S203, and if a is equal to or more than 1, the assist control unit 22 assigns 1 to the variable a in a step S204. The assist control unit 22 subsequently carries out an arithmetic operation represented by the following equations for applying the low pass filter to the torque value detected by the torque sensor 22 in a step S205. Specifically, the detected torque value is filtered according to:

$$Trq2 = Delay \ ... \ Equation \ 4$$

$$Delay = Delay + (Trq - Delay) \times a \ ... \ Equation \ 5$$

where Delay and a are variables, and Trq2 is a variable to which a filtered torque value is assigned.
In the equation 5, a period required to increase the variable Delay changes according to the change of the variable a, and a time constant consequently changes in the low pass filter.
The assist control unit 22 repeats the process from the step S201 to the step S206 until the filtered torque Trq2 becomes larger than the predetermined value (ConstThresh) in the step S206.
It should be noted that if the variable a is less than 1, the smaller the variable a is, the more slowly the variable Delay increases, and the larger the time constant in the low pass filter becomes in the step S202. On the other hand, if the variable a is more than 1, by setting the variable a to 1, the equation 5 is represented as:

$$Delay = Delay - Delay + Trq = Trq$$

the equation 4 is consequently represented as:

$$Trq2 = Delay$$

which implies the Trq and Trq2 have the same value of Delay, and the torque value detected by the torque sensor 21 can be compared with the predetermined value (ConstThresh) without filtering.
If the variable Trq2 is larger than the predetermined value (ConstThresh), the assist actuator 9 starts the operation assist for the select lever 2 in a step S207, and the assist actuator 9 continues the operation assist for the select lover 2 until the select lever 2 moves from the predetermined position, specifically the detent pin 29 falls in the next recess 27b in a step S208.
If the select lever 2 moves from the predetermined position, and the operation force becomes less than the predetermined value or the select lever 2 reaches the predetermined position, the assist control unit 22 stops the operation assist for the select lever 2 in a step S209, assigns a sufficiently small value a_const to the variable a in a step S210, and repeats the process from the step S201 again. If the sufficiently small value is assigned to the variable a in the step S210, a longer period is required until the relationship Trq 2 > ConstThresh holds as a result of the process from the steps S201 to S206, and a role as the low pass filter is exhibited, and it is thus possible to prevent the operation assist process for the select lever 2 resulting from the inertia force of the select lever 2 from continuing immediately after the operation assist stops. Moreover, there holds a relationship a = 1 after the predetermined period, the low pass filter thus does not function, the filtering is not carried out after the torque value, which temporarily increased, has converged, and the filtering can be efficiently carried out only when the inertia is acting, and when one wants to move the gear of the automatic transmission to the next position, and one applies a more or less large initial operation force to the select lever 2, the filtered torque value exceeds the predetermined value and the operation assist can be easily carried out.
Though the description has been given of the automatic transmission 100 provided with the operation range selection mechanism according to the present invention with reference to drawings, the operation range selection mechanism according to the present invention is not limited to the above configurations. Though the description has been given of the case where the position of the select lever 2 is moved from the P position to the R position with reference to FIGS. 6 and 11, for example, whether the method to change the threshold or the method to filter the torque value is employed, the position of the select lever 2 is not limited to the P and R positions, and the present embodiment may be applied to a movement between all positions.

Second Embodiment

A description will now be given of the operation range selection mechanism according to a second embodiment. An automatic transmission employing the operation range selection mechanism according to the second embodiment is different from the automatic transmission according to the first embodiment in the assist control by the assist control , unit. The components other than the assist control unit are the same as those of the first embodiment, and like components are denoted by like numerals as of the first embodiment and will not be further explained in the second embodiment.

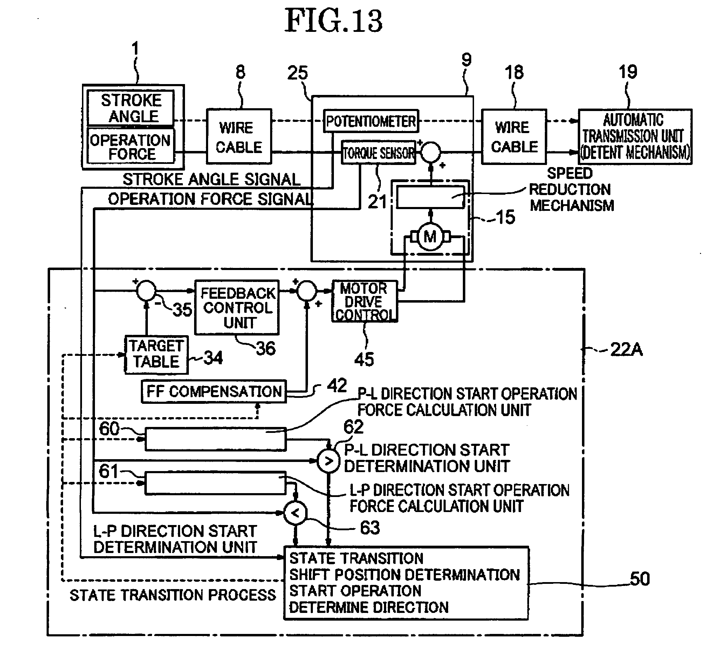

FIG. 13 is a block diagram showing the assist control unit 22a according to the second embodiment. The assist control unit 22a is different from the assist control unit 22 according to the first embodiment, and includes a P-L direction start operation force calculation unit 60, an L-P direction start operation force calculation unit 61, a P-L direction start determination unit 62, which compares a first threshold (first predetermined value) calculated by the P-L direction start operation force calculation unit 60 and the torque value detected by the torque sensor 21 with each other, and an L-P direction start determination unit 63, which compares a second threshold (second predetermined value) calculated by the L-P direction start operation force calculation unit 61 and the toque value with each other in the same manner.

The P·L direction start operation force calculation unit 60 calculates the first threshold which is used as a criterion for determining whether the assist control unit 22a starts the operation assist in the P-L direction if an operation force directed from the P position to the L position (P-L direction) is applied to the select lever 2. On the other hand, the L-P direction start operation force calculation unit 61 calculates the second threshold which is used as a criterion for determining whether the assist control unit 22a starts the operation assist in the L-P direction if an operation force directed from the L position to the P position (L-P direction) is applied to the select lever 2.

In the operation range selection mechanism according to the second embodiment, if the torque value detected by the torque sensor 21 exceeds the first threshold (first predetermined value) set by the P-L direction start operation force calculation unit 60, the assist control unit 22a determines that the select lever 2 is being operated in the P-L direction, and starts the operation assist in the P-L direction. Similarly, if the torque value detected by the torque sensor 21 exceeds the second threshold (second predetermined value) set by the L-P direction start operation force calculation unit 61, the assist control unit 22a determines that the select lever 2 is being operated in the L-P direction, and starts the operation assist in the L-P direction.

It should be noted that a description will be given assuming that the torque value in a state where the operation force is not applied to the select lever 2, and the operation assist is not being carried out is a reference ($\pm 0$), the torque value detected by the torque sensor 21 when the operation force is applied in the P-L direction is positive, and the torque value detected by the torque sensor 21 when the operation force is applied in the L-P direction is negative.

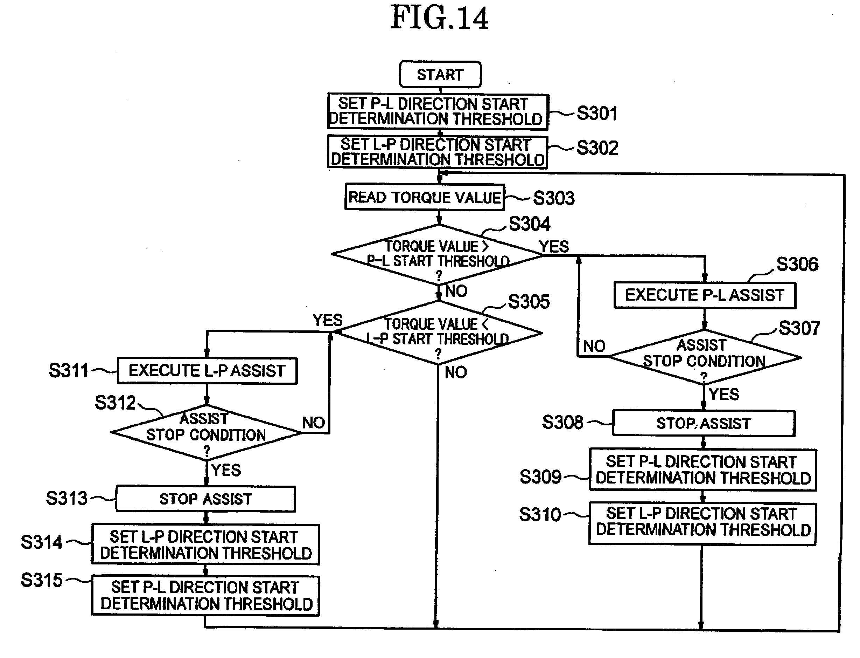

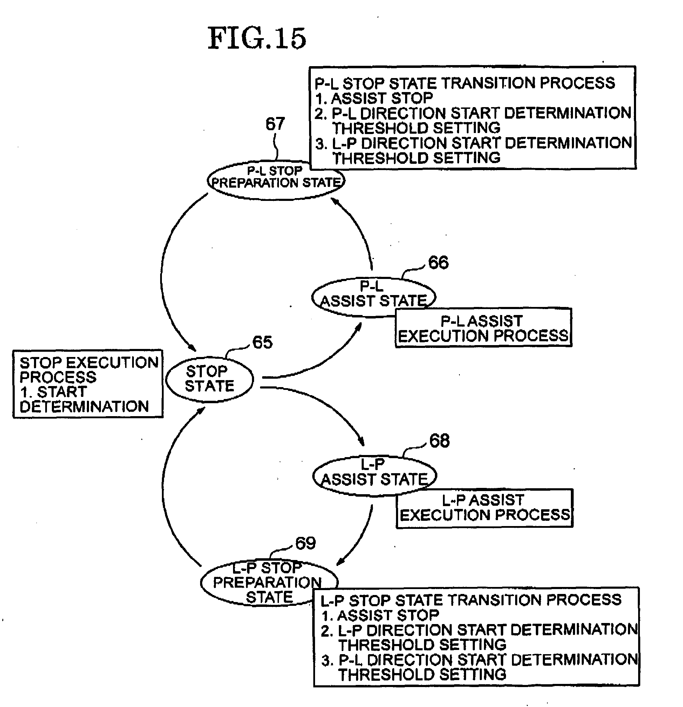

FIG. 14 is a flowchart showing the process of the operation assist for the select lever 2 by the assist control unit 22a, and FIG. 15 is a state transition diagram of the assist control unit 22a in the process shown in FIG. 14. A description will now be given of the operation assist process by the assist control unit 22a with reference to FIGS. 14 and 15.

The assist control unit 22a first sets the thresholds at which the operation assist starts by means of the P·L direction start operation force calculation unit 60 and the L·P direction start operation force calculation unit 61. Specifically, the P·L direction start operation force calculation unit 60 is caused to set the first threshold (positive value) at which the operation assist in the P·L direction starts if the select lever 2 is operated in the P·L direction (step S301), and the L·P direction start operation force calculation unit 61 is caused to set the second threshold (negative value) at which the operation assist in the L·P direction starts if the select lever 2 is operated in the L·P direction (step S302). This first threshold and the second threshold may be changed according to the selected position of the select lever 2 detected based on the stroke angle signal from the potentiometer 25 and the like.

The assist control unit 22a then reads the torque value based on the operation force signal received from the potentiometer 21 (step S303). The assist control unit 22a then causes the P-L direction start determination unit 62 to determine whether the read torque value is equal to or more than the first threshold or not (step S304). If the torque value is not equal to or more than the first threshold ("NO" in the step S304), the assist control unit 22a causes the L-P direction start determination unit 63 to determine whether the torque value is equal to or less than the second threshold or not (step S305). If the torque value is not equal to or less than the second threshold ("NO" in the step S305), the assist control unit 22a repeats the reading operation of the torque value (step S303).

A stop state 65 in the state transition diagram shown in FIG. 15 indicates a state where the operation assist is not being carried out. In the stop state 65, a "1. START DETERMINATION" process of a STOP execution process corresponds to the processes to compare the torque value with the first threshold and the second threshold (steps S304 and S305), and the stop state 65 is maintained when the torque value is less than the first threshold and more than the second threshold as described above.

If the torque value is equal to or more than the first threshold ("YES" in the step S304), the assist control unit 22a determines that the select lever 2 is moved in the P-L direction, and starts the operation assist in the P-L direction (step S306). When the operation assist in the P-L direction starts, the state of the assist control unit 22a transitions from the stop state 65 to a P-L assist state 66 in FIG. 15.

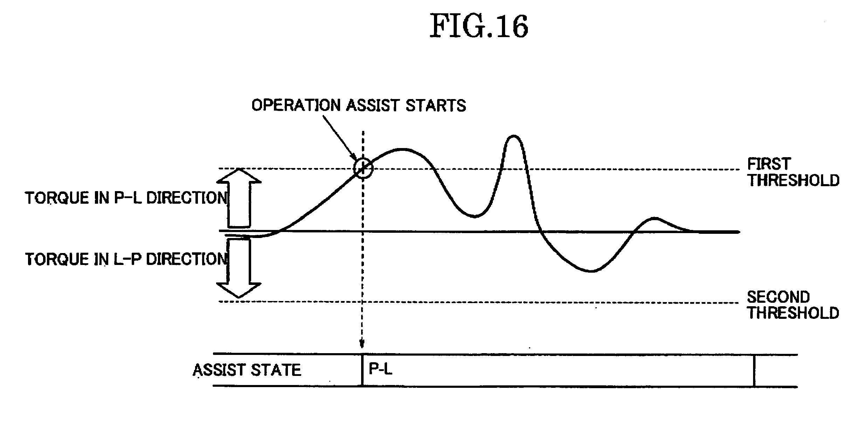

FIG. 16 shows a state where the operation force is applied to the select lever 2 in the P-L direction, and the torque value detected by the torque sensor 21 increases in the positive direction. The torque value increases when the operation force is applied to the select lever 2, and if the torque value exceeds the first threshold, the assist control unit 22a starts the operation assist.

The assist control unit 22a then determines the position of the select lever 2 based on the stroke angle signal received from the potentiometer 25, determines that an assist stop condition for the operation assist is met if the select lever 2 is moved to a predetermined position of the neighboring range in the P-L direction (step S307), and stops the operation assist (step S308). In the state transition diagram shown in FIG. 15, if the process in the step S307 determines that the assist stop condition is met, the state transitions to a P-L stop preparation state 67.

After the assist control unit 22a stops the operation assist (step S308), the assist control unit 22a again causes the P-L direction start operation force calculation unit 60 to set the first threshold (positive) (step S309), causes the L-P direction start operation force calculation unit 61 to set the second threshold (negative) (step S310), and repeats the reading operation of the torque value at the new range which the select lever 2 has moved to (step S303).

The first threshold and the second threshold are changed in the steps S309 and S310 because the thresholds are preferably changed in the new range according to the position which the select lever has moved to, or because the thresholds are temporarily changed to a higher or lower value as in a third embodiment described later.

In the state transition diagram shown in FIG. 15, a "1.ASSIST STOP" process, a "2. P·L DIRECTION START DETERMINATION THRESHOLD SETTING" process, and a "3. L·P DIRECTION START DETERMINATION THRESHOLD SETTING" process in the P·L stop preparation state 67 respectively correspond to the processes in the steps S308, S309, and S310. After these three processes (steps S308 to S310) are finished, the state transitions to the stop state 65.

If the torque value is less than the second threshold ("YES" in the step S305), the assist control unit 22a determines that the select lever 2 is moved in the L-P direction, and starts the operation assist in the L-P direction (step S311). The assist control unit 22a subsequently carries out the stop condition determination of the operation assist (step S312), stops the operation assist if the stop condition is met (step S313), sets the second threshold (step S314), and sets the first threshold (step S315) as the processes in the steps S307 to S310, and repeats the reading operation of the torque value (S303). The state transitions to the L-P assist state 68 (step S311), then transitions to the L-P stop preparation state 69 (steps S313 to S315), and then transitions to the stop state 65 (step S303) in the state transition diagram.

In this way, if the torque value detected by the torque sensor 21 is equal to or more than the first threshold (positive), the assist control unit 22a determines that an operation force is applied in the P-L direction, and starts the operation assist in the P-L direction. If the torque value detected by the torque sensor 21 is equal to or less than the second threshold (negative), the assist control unit 22a determines that an operation force is applied in the L·P direction, and starts the operation assist in the L·P direction. As a result, the assist control unit 22a can determine the operation direction of the select lever 2 by the driver based on the torque value, and can surely and stably carry out the operation assist in the direction of the operation by the driver.

Third Embodiment

A description will now be given of the operation range selection mechanism according to a third embodiment. The operation range selection mechanism according to the second embodiment sets the two thresholds of the first threshold and the second thresholds according to the operation directions of the select lever 2, and determines the operation direction of the select lever 2 based on whether the detected torque value exceeds the first or second threshold. On the other hand, the torque value detected by the torque sensor 21 rapidly decreases due to the inertia force generated when the detent pin 29 falls and is pulled into the recess 27b as the select lever 2 moves (8 in FIG. 6), and then temporarily increases due to the abutment of the detent pin 29, which has gained the torque generated by the inertia force, against the next cam protrusion 27a as described in the first embodiment (torque resulting from inertia in FIG. 6). To address this problem, though, according to the first embodiment, the generation of the operation assist due to the torque resulting from the inertia is prevented by temporarily increasing the threshold in the moving direction in which the operation assist has been carried out, if two thresholds are provided as in the second embodiment, the operation assist may be generated by the torque value which rapidly decreases due to the inertia.

A description will be given of the operation range selection mechanism according to the third embodiment which can prevent the operation assist in the direction opposite to the moving direction of the select lever 2. It should be noted that the configuration of the operation range selection mechanism according to the third embodiment is the same as the configuration of the operation range selection mechanism of the second embodiment, and like components are denoted by like numerals as of the second embodiment and will not be further explained.

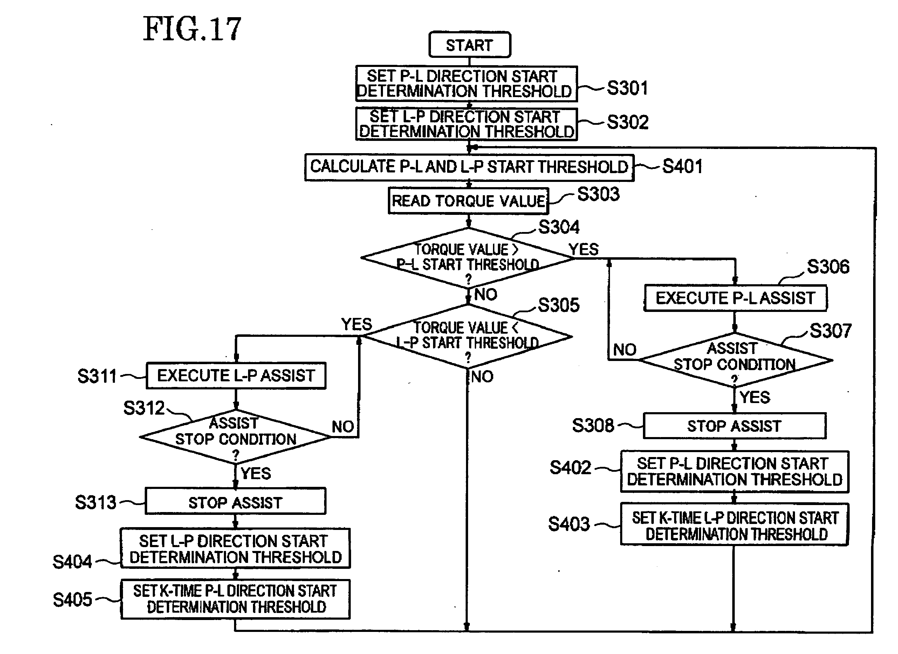

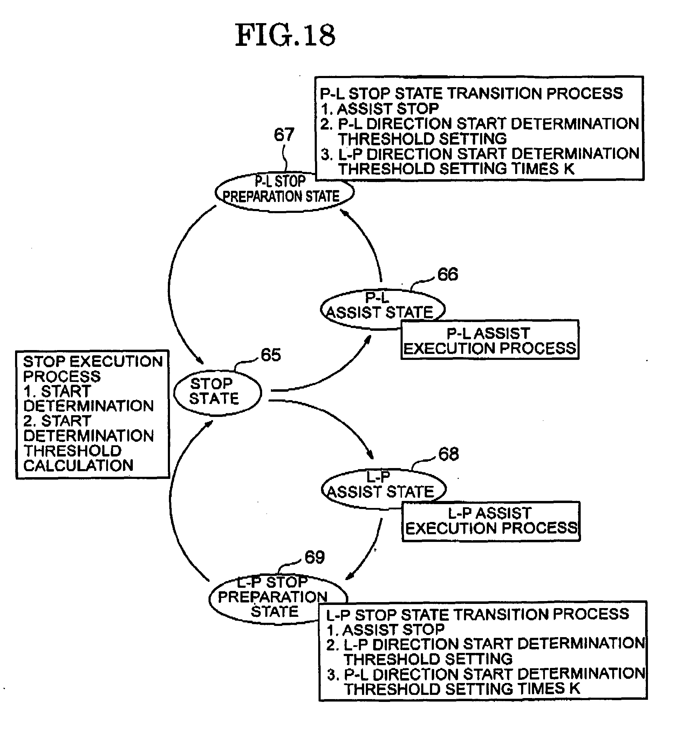

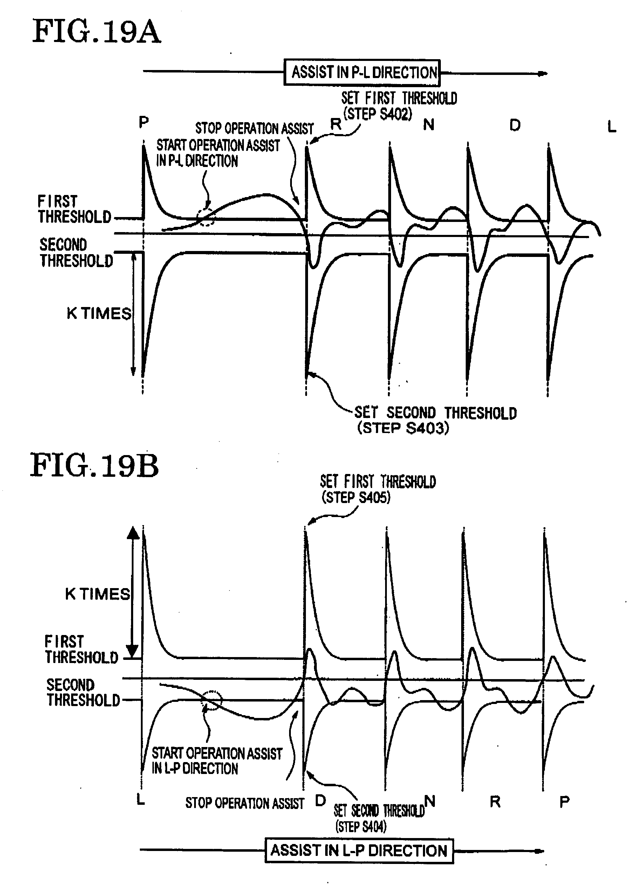

FIG. 17 is a flowchart showing a process of the operation assist for the select lever 2 carried out by the assist control unit 22a of the automatic transmission employing the operation range selection mechanism according to the third embodiment. FIG. 18 is a state transition diagram of the system control unit 22a in the process shown in FIG. 17. Moreover, FIG. 19A shows a temporal change of the torque value detected by the torque sensor 21 when the operation force is applied to the select lever 2 in the P-L direction, and the torque value thus increases. FIG. 19B shows a temporal change of the torque value detected by the torque sensor 21 when the operation force is applied to the select lever 2 in the L-P direction, and the torque value thus decreases. A description will now be given of the operation assist process by the assist control unit 22a with reference to FIGS. 17 to 19.

The assist control unit 22a sets the first threshold (positive) to start the operation assist in the P-L direction (step S301), and then sets the second threshold (negative) to start the operation assist in the L-P direction (step S302).

The assist control unit 22a then carries out a threshold calculation process for the set first and second thresholds (step S401). This threshold calculation process returns the first threshold, which is temporarily set to a higher value, and the second threshold, which is temporarily set to a lower value in setting of the first and second thresholds (steps S402 to S405) after a stop of the operation assist described later, to reference thresholds as a certain period elapses, and namely gradually returns the thresholds with the lapse of time according to the equations 1 to 3 described in the first embodiment.

The assist control unit 22a then reads the torque value based on the operation force signal received from the potentiometer 21 (step S303).

The assist control unit 22a then causes the P-L direction start determination unit 62 to determine whether the read torque value is equal to or more than the first threshold or not (step S304). If the torque value is not equal to or more than the first threshold ("NO" in the step S304), the assist control unit 22a causes the L-P direction start determination unit 63 to determine whether the torque value is equal to or less than the second threshold or not (step S305). If the torque value is not equal to or less than the second threshold ("NO" in the step S305), the assist control unit 22a proceeds to the threshold calculation process (step 5401).

In the stop state of the state transition diagram shown in FIG. 18, a "1. STAR1' DETERMINATION" process in a STOP execution process denotes a comparison process between the torque value and the first and second thresholds (steps S304 and 305), and a "2. START DETERMINATION THRESHOLD CALCULATION" process denotes the threshold calculation process (step S401).

If the torque value is equal to or more than the first threshold ("YES" in the step S304), the assist control unit 22a determines that the select lever 2 is moved in the P·L direction, and starts the operation assist in the P·L direction (step S306). When the operation assist in the P·L direction starts, the state of the assist control unit 22a transitions from a stop state 65 to a P·L assist state 66 in the state transition diagram in FIG. 18.

If an operation force is applied to the select lever 2 in the P·L direction, and the torque value detected by the torque sensor 21 increases in the positive direction, the torque value increases as shown in FIG. 19A, and the assist control unit 22a starts the operation assist if the toque value exceeds the first threshold.

The assist control unit 22a then determines the position of the select lever 2 based on the stroke angle signal received from the potentiometer 25, determines that an assist stop condition for the operation assist is met if the select lever 2 is moved to a predetermined position of the neighboring range in the P·L direction (step S307), and stops the operation assist (step S308). In the state transition diagram shown in FIG. 18, if the process in the step S307 determines that the assist stop condition is met, the state transitions to a P-L stop preparation state 67.

After the assist control unit 22a stops the operation assist (step S308), the assist control unit 22a again causes the P·L direction start operation force calculation unit 60 to set the first threshold (positive) (step S402), and causes the L·P direction start operation force calculation unit 61 to set the second threshold (negative) (step S403). Since the process to set the first threshold in the step S402 temporarily changes the threshold to a higher value as shown in FIG. 19A, even if the torque temporarily increases resulting from the inertia, it is possible to prevent the operation assist from starting as described in the first embodiment.

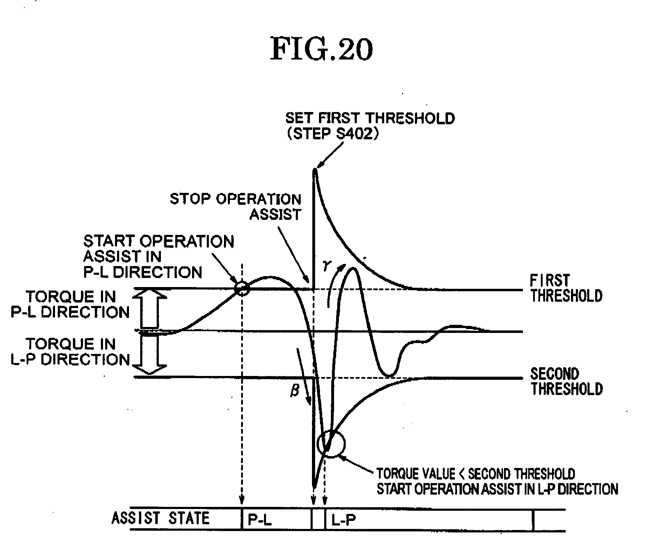

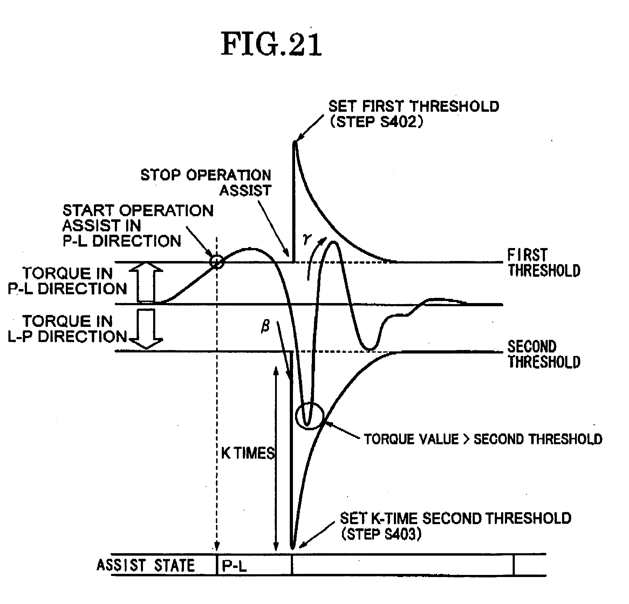

Moreover, the assist control unit 22a causes the L·P direction start operation force calculation unit 61 to set the second threshold, which is the reference for the operation assist, to a value K times as low as the second threshold (K is a constant, and 2 for example) in the process to set the second threshold in the step S403. On this occasion, if the select lever is moved in the P-L direction, and the torque value rapidly decreases due to the inertia force generated when the detent pin 29 falls and is pulled into the recess 27b of the next shift range (B in FIGS. 6, 20, and 21), this degree of the decrease is larger than the degree of the temporary increase when the detent pin 29, which has gained the torque generated by the inertia force, subsequently abuts against the end surface of the next cam protrusion 27a (torque resulting from the inertia in FIG. 6, and y in FIGS. 20 and 21). If the second threshold is decreased at the same degree of the increase of the first threshold, the torque value which decreases after the stop of the operation assist may become equal to or less than the second threshold (torque value < second threshold) as shown in FIG. 20, the operation assist may start in the direction (L·P direction) opposite to the operation direction (P·L direction) of the select lever 2, and the driver may feel a resistance when the driver moves the select lever 2 in the P·L direction. The assist control unit 22a thus sets the second threshold to the value K times as low as the second threshold in the step S403 to prevent the decreased torque value from becoming equal to or less than the second threshold as shown in FIG. 21.

In the state transition diagram shown in FIG. 18, a "1. ASSIST STOP" process, a "2. P·L DIRECTION START DETERMINATION THRESHOLD SETTING" process, and a "3. K-TIMES L-P DIRECTION START DETERMINATION THRESHOLD SETTING" process respectively correspond to the processes in the steps S308, S402, and S403 in a P-L STOP state transition process in the P-L stop preparation state 67. After these three processes (steps S308, S402, and S403) are finished, the state transitions to the stop state 65, and the Assist control unit 22a again carries out the threshold calculation process (step S401).

In this way, after the operation assist in the P-L direction is finished, the first threshold is set to the higher value, and the second threshold is set to the lower value as shown in FIG. 19A to prevent the operation assist from being carried out again due to the increase of the torque resulting from the inertia and the rapid decrease of the torque resulting from the inertia force. Especially, the operation assist in the L-P direction and the resulting resistance in the lever operation are prevented by setting the second threshold to the value K times as low as the second threshold.

If the torque value is equal to or less than the second threshold ("YES" in the step S305), the assist control unit 22a determines that the select lever 2 is moved in the L-P direction, and starts the operation assist in the L·P direction (step S311). The assist control unit 22a subsequently carries out the stop condition determination of the operation assist (step S312), stops the operation, assist if the stop condition is met (step S313), sets the second threshold (step S404), and sets the first threshold (step S405) as the processes in the steps S307 to S310, and carries out the threshold calculation process again (S40J.). The first threshold is also set to a value K times as high as the first threshold in the step S405 in order to prevent the operation assist in the P-L direction due to the rapid increase of the torque caused by the inertia force when the select lever 2 moved in the L-P direction.

The state transitions from the stop state 65 to an L-P assist state 68 (step S311), then transitions to an L-P stop preparation state 69 (steps S313, S404, and S405), and then transitions to the stop state 65 (step S401) in the state transition diagram shown in FIG. 18.

After the operation assist in the L-P direction is finished, the second threshold is set to the lower value, and the first threshold is set to the higher value as shown in FIG. 19B to prevent the operation assist from being carried out again due to the decrease of the torque resulting from the inertia and the rapid increase of the torque resulting from the inertia force. Especially, the operation assist in the P-L direction when the select lever 2 is operated, and the resulting resistance in the lever operation are prevented by setting the first threshold to the value K times as high as the first threshold.

In this way, since it is possible to prevent the operation assist from unnecessarily being carried out by setting the first threshold to the higher value, and setting the second threshold to the lower value after the stop of the operation assist, the driver does not feel discomfort due to the operation assist for the select lever 2, and does not feel a resistance when the driver continuously operates the select lever 2 passing a shift position.

Moreover, since the first threshold is set to the higher value and the second threshold is set to the lower value after the operation assist is stopped, even if a torque variation is generated by a contact of the select lever with a shift gate or a mechanical reaction during the operation of the select lever, the torque value does not easily exceed the first threshold and the second threshold, and an unintended operation assist is prevented from occurring.

Further, when the select lever 2 is operated, and is then moved to a next shift position, the decrease of the first threshold and the increase of the second threshold are carried out gradually and continuously, the unnatural operation assist process does not occur.

Though the operation range selection mechanism according to the third embodiment has been described, the assist select mechanism according to the present embodiment is not limited to the one described above. For example, though the present embodiment gradually decreases the first threshold which has been set to the higher value, and gradually increases the second threshold which has been set to the lower value, it is not necessary to gradually change the thresholds. For example, the first threshold may be maintained higher and the second threshold may be maintained lower for a certain period, specifically for a period where the torque value may increase or decrease resulting from the inertia, and may exceed the first threshold and the second threshold, and the thresholds may be returned to the original values after the period has elapsed.

Fourth Embodiment

A description will now be given of the operation range selection mechanism according to a fourth embodiment.

A general operation range selection mechanism has such a structure that a torque sensor detects a torque value (operation force) applied to a select lever, and a motor or the like is actuated to carry out an operation assist for the select lever if the detected torque value is equal to or more than a predetermined value. Moreover, the general operation assist detects the operation position of the select lever by means of a potentiometer or the like, and stops when the select lever is moved to a predetermined position (stop position) of the next shift position as described in the first to third embodiments.

However, if the select lever is at the P position, the neighboring position is only the R position, and if the select lever is at the L position, the neighboring position is only the D position. Therefore, if an operation force is applied from the P position in a wall direction (direction opposite to the direction to the R position), or from the L position in a wall direction (direction opposite to the direction to the D position), there poses such a problem that the control condition "the operation assist is stopped when the select lever is moved to a stop position" cannot he used.

On a general vehicle, unless a driver operates an operation button provided on a select lever, the select lever at the P position cannot be moved to other position (specifically, the neighboring R position) in order to prevent an unintended start of the vehicle or the like. As a result, if an operation force is applied to the select lever in the P position without operating the operation button, there poses such a problem that the operation assist is carried out in the P position, and a vibration or the like thus occurs. However, in order to address the vibration in the P position, there has been devised a technology which limits a driving force of a motor, and prevents the operation assist in the reverse direction by the motor thereby preventing the vibration as disclosed in Japanese Patent Application No. 2004-200086.

On the other hand, if the select lever is operated with a momentum from the D position to the L position (in the D-L direction), or the select lever at the L position is pressed against the wall, there poses such a problem that the select lever abuts against the wall of the L position thereby generating a torque in the direction opposite to the wall (toward the D position), resulting in an operation assist from the L position to the D position (L-D direction), and the select lever may move toward the D position.

The invention relating to the fourth embodiment is devised in view of the foregoing problem, and has an object to provide an operation range selection mechanism which can prevent the operation assist toward the D position from being generated, and can thus prevent the select lever from moving toward the D position even if an operation force is applied to the select lever in the direction from the L position to the wall.

It should be noted that the configuration of the operation range selection mechanism according to the fourth embodiment is the same as the configuration of the first embodiment, and like components are denoted by like numerals as of the first embodiment and will not be further explained.

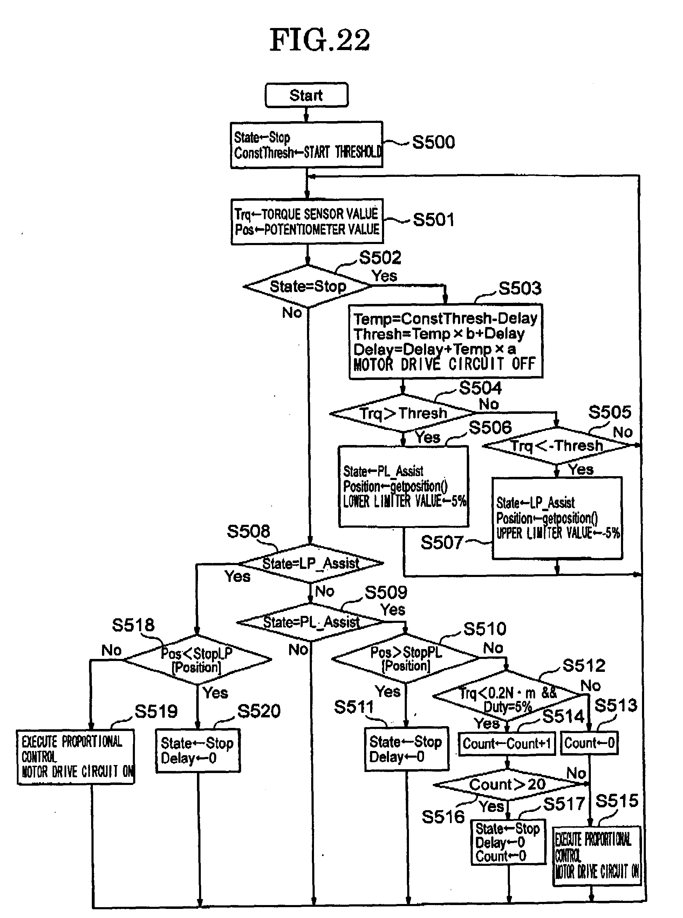

FIG. 22 is a flowchart showing a process of the operation assist carried out by the assist control unit 22 of the automatic transmission employing the operation range selection mechanism according to the fourth embodiment.

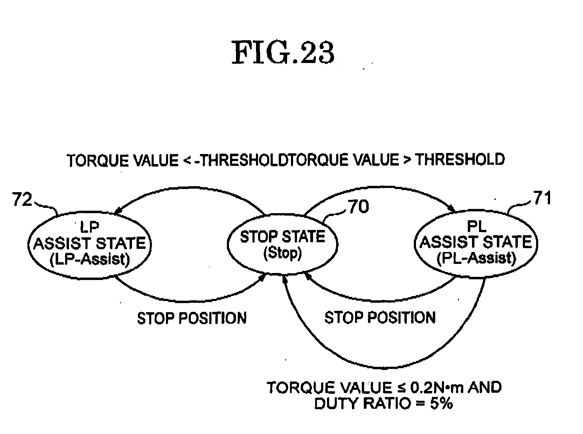

The assist control unit 22 first sets a variable State to Stop in a step S500, and sets a variable ConstThresh to a start threshold. The variable State denotes a state in a state transition diagram shown in FIG. 23, and is set to Stop when the operation assist is not being carried out (stop state 70), is set to PL_Assist when the operation assist in the P-L direction is carried out (P-L assist state 71), and is sot to LP _Assist when the operation assist in the L-P direction is carried out (L-P assist state 72). The start threshold is the reference for starting the operation assist as described in the first embodiment, and corresponds to 0.3N-m, for example.

The assist control unit 22 then assigns the toque value indicated by the signal indicating the operation force detected by the torque sensor 21 to a variable Trq in a step S501, and assigns the stroke angle indicated by the signal and detected by the potentiometer 25 to a variable Pos. The assist control unit 22 then determines whether the variable State is Stop or not in a step S502. Since the variable State is set to Stop in the step S500, the assist control unit 22 determines "YES" and causes the process to proceed to a step S503.

The assist control unit 22 then acquires the threshold (Thresh) which is changed from the predetermined value (ConstThresh) by means of the arithmetic operation circuit shown in FIG. 8 in a step S603. Specifically, the threshold (Thresh) is obtained by assigning respective values to the following equations 1 to 3 described in the first embodiment:

$$\text{Temp} = \text{ConstThresh} - \text{Delay} \ldots \text{Equation 1}$$

$$\text{Thresh} = \text{Temp} \times b - \text{Delay} \ldots \text{Equation 2}$$

$$\text{Delay} = \text{Delay} + \text{Temp} \times a \ldots \text{Equation 3}$$

where Delay and Temp are variables, and a and b are constants.

It should be noted that the variable Delay is zero in the first step S503. The predetermined value (ConstThresh) is set in advance. FIG. 8 shows the configuration of the arithmetic operation circuit as a block diagram, and $q^{-1}$ denotes a delay by one sample period.

The assist control unit 22 then determines whether the torque value assigned to the variable Trq in the step S501 is equal to or more than the threshold (Thresh) calculated in the step S503 in a step S504, and causes the process to proceed to a step S506 if the torque value is equal to or more than the threshold ("YES"), and causes the process to proceed to a step S506 if the torque value is less than the threshold ("NO").

The assist control unit 22 then determines whether the torque value assigned to the variable Trq in the step S501 is equal to or less than the threshold (-Thresh) in the step S505 as in the step S504, and causes the process to proceed to a step S507 if the torque value is equal to or less than the threshold ("YES"), and causes the process to proceed to the step S501 if the torque value is more than the threshold ("NO"). Namely, the assist control unit 22 repeats the process of the steps S501 to S505 while the threshold (-Thresh) < torque value < threshold (Thresh), specifically, until the select lever 2 is sufficiently moved.

The threshold (Thresh), which is initially large, is decreased with the lapse of time according to the time constant by repeating the process of the steps S501 to S505 to converge the threshold to the predetermined value (ConstThresh) as shown in FIG. 6. If the detent pin 29 passes over the cam protrusion 27a, and falls in the recess 27b while the select lever 2 is being moved (rotated), the detent pin 29 abuts against the end surface of the next cam protrusion 27a due to the inertia force, the torque value detected by the torque sensor 21 temporarily increases as shown in FIG. 6, and may exceed the predetermined value (ConstThresh), the operation assist thus may be carried out again, and the above process is provided to prevent the operation assist from being carried out again.

The select lever 2 is then moved (rotated) in the P-L- direction, and the torque value thus becomes equal to or more than the threshold (Thresh), the assist control unit 22 determines "YES" in the step S504, and causes the process to proceed to a step S506. Moreover, the select lever 2 is moved (rotated) in the L·P direction, and the torque value thus becomes equal to or less than the threshold (-Thresh), the assist control unit 22 determines "YES" in the step S505, and causes the process to proceed to a step 5507. It should be noted that the rotation of the select lever 2 is in an initial stage where the rotation has just started in the determination processes in the steps S504 and S505, and the torque value detected by the torque sensor 21 thus does not increase rapidly as shown in FIG. 6.

For example, if the select lever 2 is moved in the P-L direction, the torque value detected by the torque sensor 21 increases as the select lever 2 is moved (rotated) while the threshold (Thresh) obtained in the step S503 decreases with the lapse of time, and the assist control unit 22 determines "YES" in the step S504 after a certain period (several tens of milliseconds, for example). Namely, the torque value assigned to the variable Trq in the step S501 exceeds the threshold (Thresh) after the predetermined period.

The assist control unit 22 sets the variable State to PL_Assist in the step S506, obtains a position of the select lever 2, namely, a position P, R, N, D, or L based on the stroke angle signal obtained in the step S501, assigns the position P, R, N, D, or L to a variable Position, and sets a lower limit of the duty of the motor drive control unit (motor drive control block) 45 to 5%.

Similarly, if the select lever 2 is moved in the L-P direction, the torque value detected by the torque sensor 21 decreases as the select lever 2 is moved (rotated) while the threshold (Thresh) obtained in the step S503 increases with the lapse of time, and the assist control unit 22 determines "YES" in the step S505 after a certain period (several tens of milliseconds, for example). Namely, the torque value assigned to the variable Trq in the step S501 becomes equal to or less than the threshold (-Thresh) after the predetermined period.

The assist control unit 22 sets the variable State to LP_Assist in the step S507, obtains a position of the select lever 2, namely, a position P, R, N, D, or L based on the stroke angle signal obtained in the step S501, assigns the position P, R, N, D, or L to the variable Position, and sets a lower limit of the duty of the motor drive control unit (motor drive control block) 45 to 5%.

The assist control unit 22 causes the process to return to the step S501 after the process in the step S506 or S507, and acquires the latest operation force signal (torque value) and the stroke angle signal.

The present embodiment is an invention to avoid the generation of the operation assist in the opposite direction if an operation force toward the wall is applied to the select lever 2 at the L position, since the operation force is applied to the select lever 2 in the P-L direction, the assist control unit 22 determines "YES" in the step S504, the variable State is set to PL_Assist in the step S506, L is assigned to the variable Position, and the lower limit of the duty of the motor drive control unit (motor drive control block) 45 is set to 5%.

Since the variable State is set to PL_Assist in the step S506, and is not Stop any longer, the assist control unit 22 determines "NO" in the step S502, and causes the process to proceed to the step S508.

The assist control unit 22 determines whether the variable State is LP_Assist in the step S508. On this occasion, since the variable State is set to PL_Assist in the step S506, the assist control unit 22 determines "NO", and causes the process to proceed to a step S509.

The assist control unit 22 determines whether the variable State is PL_Assist in the step S509. On this occasion, since the variable State is set to PL_Assist in the step S506, the assist control 22 determines "YES", and causes the process to proceed to a step S510.

The assist control unit 22 determines the position of the select lever 2 in the step S510. This is carried out by comparing values in an array StopPL (voltages) corresponding to stop positions set for the respective shift positions in advance and the latest stroke angle signal obtained in the step S501 to determine whether a predetermined select lever position (stop position) where the operation assist is to be stopped has been exceeded. In other words, if the stop position has been exceeded, the assist control unit 22 determines "YES", and causes the process to proceed to a step S511, and if the stop position has not been exceeded, the assist control unit 22 determines "NO", and causes the process to proceed to a step S512.

According to the present embodiment, if an operation force toward the wall is applied to the select lever 2 at the L position, it is not possible to move the select lever 2 from the L position toward the wall, the operation assist cannot be stopped according to the condition that the select lever 2 exceeds the stop position. In other words, the assist control unit 22 determines "YES" in the process in the step S510, and does not cause the process to proceed to the step S511. As a result, the assist control unit 22 causes the process to proceed to the step S512.

If the select lever 2 is at a shift position other than the L position, and the shift lever 2 is moved from this shift position in the P-L direction, the assist control unit 22 causes the process to proceed to the step S511, set the variable State to Stop, causes the state to transition to the stop state 70, stops the operation of the motor drive control unit 45, sets the variable Delay to zero, and causes the process to return to the step S501.

The assist control unit 22 determines whether the torque value obtained in the step S501 is equal to or less than 0.2N·m and the electric motor 15 is driven at the duty ratio of 5% in the step S512. The assist control unit 22 causes the process to proceed to a step S513 if these conditions are not met (NO), and causes the process to proceed to a step S514 if the conditions are met (YES).

The assist control unit 22 sets a count of an internal counter (Count) to zero in the step S513, carries out proportional control to drive the electric motor 15 for the operation assist in the step S515, and causes the process to return to the step S501.

In other words, if an operation force toward the wall is applied to the select lever 2 in the L position, and the torque value detected by the torque sensor 21 is equal to or more than 0.2N·m, or the duty ratio of the electric motor 15 is not 5% as a result of the operation assist, the assist control unit 22 carries out the operation assist in the step S515, and repeats the process in the steps S501, S502, S508, S509, S510, S512, S513, and S515 for the operation assist.

However, if the operation assist drives the electric motor 15 in the direction toward which the operation force is applied, the torque sensor 21 approaches a balanced state without a torsion as a result of the drive by the electric motor 15, and the torque value detected by the torque sensor 21 gradually approaches zero. However, even if the torque value decreases below 0.2N·m, the operation assist continues until the electric motor 15 is driven at the duty ratio of 5% in the step S512, and the operation assist toward the wall of the L position is continuously repeated.

If the torque value is equal to or less than 0.2N·m, and the electric motor 15 is driven at the duty ratio of 5%, the process proceeds from the step S512 to the step S514.

The assist control unit 22 sets the count of the internal counter to 1 in the step S514, determine whether the count of the internal counter is more than 20 in a step S516, causes the process to proceed to the step S515 if the count is not more than 20 (NO), and causes the process to proceed to a step S517 if the count is more than 20 (YES).

In other words, the process in the steps S500, S501, S502, S504, and S506 is carried out if an operation force in the wall direction is applied to the select lever 2, and the process in the steps S501, S502, S508, S509, S510, S512, S513, and S515 is then repeated until the torque value detected by the torque sensor is equal to or less than 0.2N·m, and the electric motor is driven at the duty ratio of 5%. In other words, the operation assist continues until the torque value detected by the torque sensor 21 is equal to or less than 0.2N·m, and the electric motor 15 is driven at the duty ratio of 5%.

If the select lover 2 comes in contact with the wall of the L position, the rotation of the select lever is restrained, and the torque value detected by the torque sensor 21 due to the drive by the electric motor 15 becomes below 0.2N·m, and the electric motor 15 is driven at the duty of 5%, the assist control unit 22 causes the process to proceed to the step S514, and continues the operation assist by repeating the process in the steps S501, S502, S508, S509, S512, S514, S516, and S515 until the count of the internal counter exceeds 20 in the step S516.

If the count of the internal counter exceeds 20 in the step S516, the assist control unit 22 causes the process to proceed to the step S517, set the variable State to Stop, stops the operation of the motor drive control unit 45, sets the variable Delay to zero, sets the count of the internal counter to zero, and repeats, the process of the step S501.

Though the drive for the electric motor 15 stops when the operation of the motor drive control unit 45 stops, the certain period elapses until the electric motor 15 stops since the torque value detected by the torque sensor 21 becomes equal to or less than 0.2N·m, and the duty ratio of the electric motor 15 becomes 5%, specifically the period until the count of the internal counter becomes 20 (200ms in total if the period of the process of the steps S501, S502, S508, S509, S510, S512, S514, S516, and S515 is 10ms, for example) elapses, the drive force of the electric motor 15 is small, and it is thus possible to avoid the inconvenience that "the balance of the torsion generated in the torque sensor 21 collapses as soon as the electric motor 15 stops, a torque directed toward the opposite direction is thus generated, and the operation assist is carried out in the L-P direction", If the select lever 2 is moved in the L-P direction, the process proceeds through the steps S500, S501, S503, S504, S506, and S507, and the variable State is set to LP_Assist in the step S507, the process proceeds through steps S501, S502, and S503, the process proceeds to the step S518 in the step S503 since the variable State is LP_Assist, the proportional control is carried out until the select lever 2 reaches the stop position to drive the motor drive control unit 45 for the operation assist in the step S518, the process proceeds to the step S520 if the stop position is reached, the variable State is set to Stop, the state transitions to Stop, the operation of the motor drive control unit 45 is stopped, the variable Delay is set to zero, and the process returns to the step S501.

As, described above, with the operation range selection mechanism according to the present embodiment, even if an operation force toward the wall of the L range is applied to the select lever 2, since the operation assist stops when the torque value and the drive force of the electric motor become close to zero, it is possible to prevent the operation assist in the L·P direction from being carried out due to the increase of the torque toward the direction opposite to the side wall.

An automatic transmission unit including an automatic transmission, and any one of the above operation range selection mechanisms is one of the present invention.

Moreover, an automobile including any one of the above operation range selection mechanisms is one of the present invention.

**Claims**

1. An operation range selection mechanism used for an automatic transmission including a plurality of operation ranges selected by a select lever, comprising:

   an input operation force detector that detects an operation force generated by an operation applied to the select lever;
   an assist actuator that adds an assist force to the select lever to carry out an operation assist for the select lever; and
   an assist force control device that controls said assist actuator to start the operation assist for the select lever upon the value of the operation force detected by said input operation force detector being equal to or more than a predetermined value,
   wherein said assist force control device stops the operation assist upon the operation force being leas than the predetermined value or the select lever having reached a predetermined position, and then temporarily sets the predetermined value to a higher value.

2. The operation range selection mechanism according to claim 1, wherein said assist force control device gradually decreases the predetermined value temporarily set to the higher value with the lapse of time thereby returning the predetermined value to the original predetermined value after a certain period.

3. An operation range selection mechanism used for an automatic transmission including a plurality of operation ranges selected by a select lever, comprising:

   an input operation force detector that detects an operation force generated by an operation applied to the select lever;
   an assist actuator that adds an assist force to the select lever to carry out an operation assist for the select lever; and
   an assist force control device that controls said assist actuator to start the operation assist for the select lever upon the value of the operation force detected by said input operation force detector being equal to or more than a predetermined value,
   wherein said assist force control device stops the operation assist upon the operation force being less than the predetermined value or the select lever having reached a predetermined position, and then temporarily applies filtering by means of a low pass filter to the detected value of the operation force to control said assist actuator based on the filtered operation force.

4. The operation range selection mechanism according to claim 3, wherein said assist force control device causes the value of the filtered operation force to gradually approach the value of the operation force without the filtering by changing a time constant of the filtered operation force with the lapse of time thereby finishing the filtering after a certain period.

5. The operation range selection mechanism according to any one of claims 1 to 4, comprising an operation position detector that detects an operation position of the select lever, wherein said assist force control device, upon said operation position detector detecting a movement of the operation position of the select lever from one shift position to neighboring another shift position, stops the operation assist by said assist actuator.

6. An operation range selection mechanism for an automatic transmission comprising:

   an input operation force detector that detects an operation force generated by an operation applied to the select lever;

   an assist actuator that adds an assist force to the select lever to carry out an operation assist for the select lever; and

   an assist force control device that, upon a value of the operation force detected by said input operation force detector is equal to or more than a first predetermined value, determines that an operation position of the select lever is moved toward a first neighboring shift position, and controls said assist actuator to start an operation assist for the select lever toward the first shift position, and, upon the value of the operation force detected by said input operation force detector is equal to or less than a second predetermined value, determines that the operation position of the select lever is moved toward a second neighboring shift position located opposite to the first shift position, and controls said assist actuator to start an operation assist for the select lever toward the second shift position.

7. The operation range selection mechanism for an automatic transmission according to claim 6, wherein said assist force control device, after controlling said assist actuator to stop the operation assist, temporarily sets the first predetermined value to a higher value, and sets the second predetermined value to a lower value.

8. The operation range selection mechanism for an automatic transmission according to claim 7, wherein said assist force control device gradually decreases the first predetermined value temporarily set to the higher value thereby returning the first predetermined value to the original first predetermined value after a certain period, and gradually increases the second predetermined value temporarily set to the lower value thereby returning the second predetermined value to the original second predetermined value after a certain period.

9. An operation range selection mechanism for an automatic transmission comprising:

   an input operation force detector that detects an operation force generated by an operation applied to the select lever;

   an assist actuator that adds an assist force to the select lever to carry out an operation assist for the select lever;

   an assist force control device that controls said assist actuator to start the operation assist for the select lever upon the value of the operation force detected by said input operation force detector being equal to or more than a predetermined value; and

   an operation position detector that detects an operation position of the select lever,

   wherein said assist force control device, upon said operation position detector determining that the select lever is at an L position, and said input force detector determining that the operation force is applied on a wall side of the select lever, controls said assist actuator to start the operation assist for the select lever toward the wall side, thereby reducing a toque value applied to the select lever by the operation force by means of the operation assist, and finishes the operation assist upon the torque value and the assist force become close to zero.

10. An automatic transmission unit comprising the operation range selection mechanism according to any one of claims 1 to 4 and 6 to 9, and an automatic transmission.

11. An automobile comprising the operation range selection mechanism according to any one of claims 1 to 4 and 6 to 9.

12. An automatic transmission unit comprising the operation range selection mechanism according to claim 5, and an automatic transmission.

13. An automobile comprising the operation range selection mechanism according to claim 5.

**Amended claims under Art. 19.1 PCT**

1. An operation range selection mechanism used for an automatic transmission including a plurality of operation ranges selected by a select lever, comprising:

   an input operation force detector that detects an operation force generated by an operation applied to the select lever;

an assist actuator that adds an assist force to the select lever to carry out an operation assist for the select lever; and

an assist force control device that controls said assist actuator to start the operation assist for the select lever upon the value of the operation force detected by said input operation force detector being equal to or more than a predetermined value,

wherein said assist force control device stops the operation assist upon the operation force being less than the predetermined value or the select lever having reached a predetermined position, and then temporarily sets the predetermined value to a higher value.

**2.** The operation range selection mechanism according to claim 1, wherein said assist force control device gradually decreases the predetermined value temporarily set to the higher value with the lapse of time thereby returning the predetermined value to the original predetermined value after a certain period.

**3.** An operation range selection mechanism used for an automatic transmission including a plurality of operation ranges selected by a select lever, comprising:

an input operation force detector that detects an operation force generated by an operation applied to the select lever;

an assist actuator that adds an assist force to the select lever to carry out an operation assist for the select lever; and

an assist force control device that controls said assist actuator to start the operation assist for the select lever upon the value of the operation force detected by said input operation force detector being equal to or more than a predetermined value,

wherein said assist force control device stops the operation assist upon the operation force being less than the predetermined value or the select lever having reached a predetermined position, and then temporarily applies filtering by means of a low pass filter to the detected value of the operation force to control said assist actuator based on the filtered operation force.

**4.** The operation range selection mechanism according to claim 3, wherein said assist force control device causes the value of the filtered operation force to gradually approach the value of the operation force without the filtering by changing a time constant of the filtered operation force with the lapse of time thereby, finishing the filtering after a certain period.

**5.** The operation range selection mechanism according to any one of claims 1. to 4, comprising an operation position detector that detects an operation position of the select lever, wherein said assist force control device, upon said operation position detector detecting a movement of the operation position of the select lever from one shift position to neighboring another shift position, stops the operation assist by said assist actuator.

**6.** (After amendment) An operation range selection mechanism for an automatic transmission comprising:

an input operation force detector that detects an operation force generated by an operation applied to the select lever;

an assist actuator that adds an assist force to the select lever to carry out an operation assist for the select lever; and

an assist force control device that, upon a value of the operation force detected by said input operation force detector is equal to or more than a first predetermined value, determines that an operation position of the select lever is moved toward a first neighboring shift position, and controls said assist actuator to start an operation assist for the select lever toward the first shift position, and, upon the value of the operation force detected by said input operation force detector is equal to or less than a second predetermined value, determines that the operation position of the select lever is moved toward a second neighboring shift position located opposite to the first shift position, and controls said assist actuator to start an operation assist for the select lever toward the second shift position,

wherein said assist force control device, after controlling said assist actuator to stop the operation assist, temporarily sets the first predetermined value to a higher value, and sets the second predetermined value to a lower value.

**7.** (Deleted)

**8.** (After amendment) The operation range selection mechanism for an automatic transmission according to claim 6 wherein said assist force control device gradually decreases the first predetermined value temporarily set to the higher value thereby returning the first predetermined value to the original first predetermined value after a certain period, and gradually increases the second predetermined value temporarily set to the lower value thereby returning the second predetermined value to the original second predetermined value after a certain period.

**9.** An operation range selection mechanism for an automatic transmission comprising:

an input operation force detector that detects an operation force generated by an operation applied to the select lever;
an assist actuator that adds an assist force to the select lever to carry out an operation assist for the select lever;
an assist force control device that controls said assist actuator to start the operation assist for the select lever upon the value of the operation force detected by said input operation force detector being equal to or more than a predetermined value; and
an operation position detector that detects an operation position of the select lever,
wherein said assist force control device, upon said operation position detector determining that the select lever is at an L position, and said input force detector determining that the operation force is applied on a wall side of the select lever, controls said assist actuator to start the operation assist for the select lever toward the wall side, thereby reducing a toque value applied to the select lever by the operation force by means of the operation assist, and finishes the operation assist upon the torque value and the assist force become close to zero.

**10.** (After amendment) An automatic transmission unit comprising the operation range selection mechanism according to any one of claims 1 to 4, 6, 8, and 9, and an automatic transmission.

**11.** (After amendment) An automobile comprising the operation range selection mechanism according to any one of claims 1 to 4, 6, 8, and 9.

**12.** An automatic transmission unit comprising the operation range selection mechanism according to claim 5, and an automatic transmission.

**13.** An automobile comprising the operation range selection mechanism according to claim 5.

# FIG.1

P RANGE: STOP
R RANGE: REVERSE
N RANGE: NEUTRAL
D RANGE: FORWARD
L RANGE: FORWARD (LOW GEAR)

POWER SUPPLY

2    SELECT LEVER
9    ASSIST ACTUATOR
21   TORQUE SENSOR
22   ASSIST CONTROL UNIT
25   POTENTIOMETER

EP 1 818 569 A1

# FIG.2

# FIG.3

EP 1 818 569 A1

# FIG.4

# FIG.5

START

READ OPERATION FORCE — S1

READ STROKE ANGLE — S2

CALCULATE OPERATION DIRECTION — S3

CALCULATE OPERATION SPEED /ACCELERATION — S4

FF COMPENSATION TABLE READING PROCESS — S5

TARGET TABLE READING PROCESS — S6

SET FF ASSIST FORCE Fff — S7

SET FB ASSIST FORCE Ffb — S8

SET TARGET ASSIST FORCE Fa=Fff+Ffb — S9

DRIVE ELECTRIC MOTOR — S10

INTERMEDIATE STOP PREVENTION PROCESS — S11

END

# FIG.6

C:STOP PREPARATION STATE

A:STOP STATE

B:ASSIST STATE

C:STOP

THRESHOLD
(Thresh)

α

β

TORQUE RESULTING
FROM INERTIA

TIME

PREDETERMINED
VALUE
(ConstThresh)

P- SHIFT POSITION

R- SHIFT POSITION

# FIG.7

START

ASSIGN TORQUE VALUE TO VARIABLE Trq — S. 100

CALCULATE THRESHOLD — S. 101

S. 102 — Trq > Thresh ? — No / Yes

CARRY OUT OPERATION ASSIST — S. 103

LEVER POSITION > PREDETERMINED POSITION? — S. 104 — No / Yes

STOP OPERATION ASSIST — S. 105

ASSIGN 0 TO Delay — S. 10 6

# FIG.8

temp

ConstThresh

$a<1 \cdot b>1$

Thresh

Delay

# FIG.9

①:TRANSITION IF PREDETERMINED
TORQUE VALUE IS EXCEEDED

A: STOP STATE
STOP ELECTRIC MOTOR
REDUCE THRESHOLD WITH
THE LAPSE OF TIME

B: ASSIST STATE
DRIVE ELECTRIC
MOTOR

③:TRANSITION IMMEDIATELY

C: STOP
PREPARATION STATE
STOP ELECTRIC MOTOR
INCREASE THRESHOLD

②:TRANSITION IF
THE POSITION OF
SELECT LEVER
EXCEEDS
PREDETERMINED
POSITION

# FIG.10

$1/a$

$b \times$ ConstThresh

THRESHOLD
(Thresh)

PREDETERMINED VALUE
(ConstThresh)

t

# FIG.11

C:STOP PREPARATION STATE

A:STOP STATE

B:ASSIST STATE

A:STOP

B:ASSIST STATE

TORQUE RESULTING FROM INERTIA

NEXT OPERATION BY USER

LOW-PASS-FILTERED TORQUE SENSOR VALUE

PREDETERMINED VALUE (ConstThresh)

GRADUALLY DECREASE TIME CONSTANT

TIME

P- SHIFT POSITION

R- SHIFT POSITION

EP 1 818 569 A1

# FIG.12

START

ASSIGN 1 TO VARIABLE a
ASSIGN 0 TO VARIABLE Delay    S. 200

ASSIGN TORQUE VALUE
TO VARIABLE Trq    S. 201

S. 202    a ≥ 1 ?    Yes

No

S. 203    ASSIGN SQUARE OF a
TO VARIABLE a

ASSIGN 1
TO VARIABLE a    S. 204

CARRY OUT
FILTERING    S. 205

S. 206    Trq2 >
ConstThresh?    No

Yes

CARRY OUT
OPERATION ASSIST    S. 207

No    S. 208

LEVER POSITION >
PREDETERMINED
POSITION?    Yes

STOP
OPERATION ASSIST    S. 209

SET FILTER COEFFICIENT
ASSIGN a_const TO VARIABLE a    S. 210

# FIG.13

STROKE ANGLE

OPERATION FORCE

1

WIRE CABLE

8

POTENTIOMETER

TORQUE SENSOR

25

9

21

WIRE CABLE

18

AUTOMATIC TRANSMISSION UNIT (DETENT MECHANISM)

19

STROKE ANGLE SIGNAL

OPERATION FORCE SIGNAL

SPEED REDUCTION MECHANISM

M

15

FEEDBACK CONTROL UNIT

35

36

MOTOR DRIVE CONTROL

45

TARGET TABLE

34

22A

FF COMPENSATION

42

P-L DIRECTION START OPERATION FORCE CALCULATION UNIT

60

62

P-L DIRECTION START DETERMINATION UNIT

61

L-P DIRECTION START OPERATION FORCE CALCULATION UNIT

63

L-P DIRECTION START DETERMINATION UNIT

STATE TRANSITION PROCESS

STATE TRANSITION
SHIFT POSITION DETERMINATION
START OPERATION
DETERMINE DIRECTION

50

EP 1 818 569 A1

# FIG.14

START

SET P-L DIRECTION START DETERMINATION THRESHOLD — S301

SET L-P DIRECTION START DETERMINATION THRESHOLD — S302

READ TORQUE VALUE — S303

S304 — TORQUE VALUE > P-L START THRESHOLD ?

YES → EXECUTE P-L ASSIST — S306

NO ↓

S305 — TORQUE VALUE < L-P START THRESHOLD ?

S307 — ASSIST STOP CONDITION ?

NO

YES → EXECUTE L-P ASSIST — S311

NO

S312 — ASSIST STOP CONDITION ?

NO

YES

S313 — STOP ASSIST

S314 — SET L-P DIRECTION START DETERMINATION THRESHOLD

S315 — SET P-L DIRECTION START DETERMINATION THRESHOLD

S308 — STOP ASSIST

SET P-L DIRECTION START DETERMINATION THRESHOLD — S309

SET L-P DIRECTION START DETERMINATION THRESHOLD — S310

31

# FIG.15

P-L STOP STATE TRANSITION PROCESS
1. ASSIST STOP
2. P-L DIRECTION START DETERMINATION THRESHOLD SETTING
3. L-P DIRECTION START DETERMINATION THRESHOLD SETTING

67

P-L STOP PREPARATION STATE

66

P-L ASSIST STATE

P-L ASSIST EXECUTION PROCESS

65

STOP STATE

STOP EXECUTION PROCESS
1. START DETERMINATION

68

L-P ASSIST STATE

L-P ASSIST EXECUTION PROCESS

69

L-P STOP PREPARATION STATE

L-P STOP STATE TRANSITION PROCESS
1. ASSIST STOP
2. L-P DIRECTION START DETERMINATION THRESHOLD SETTING
3. P-L DIRECTION START DETERMINATION THRESHOLD SETTING

# FIG.16

OPERATION ASSIST STARTS

TORQUE IN P-L DIRECTION

TORQUE IN L-P DIRECTION

FIRST
THRESHOLD

SECOND
THRESHOLD

ASSIST STATE | P-L

EP 1 818 569 A1

# FIG.17

START

SET P-L DIRECTION START DETERMINATION THRESHOLD — S301

SET L-P DIRECTION START DETERMINATION THRESHOLD — S302

CALCULATE P-L AND L-P START THRESHOLD — S401

READ TORQUE VALUE — S303

S304
TORQUE VALUE > P-L START THRESHOLD ? — YES / NO

YES → EXECUTE P-L ASSIST — S306

S305 TORQUE VALUE < L-P START THRESHOLD ? — YES / NO

S307 ASSIST STOP CONDITION ? — NO / YES

S311 — EXECUTE L-P ASSIST

S312 ASSIST STOP CONDITION ? — NO / YES

S308 — STOP ASSIST

S402 — SET P-L DIRECTION START DETERMINATION THRESHOLD

S403 — SET K-TIME L-P DIRECTION START DETERMINATION THRESHOLD

S313 — STOP ASSIST

S404 — SET L-P DIRECTION START DETERMINATION THRESHOLD

S405 — SET K-TIME P-L DIRECTION START DETERMINATION THRESHOLD

EP 1 818 569 A1

34

# FIG.18

P-L STOP STATE TRANSITION PROCESS
1. ASSIST STOP
2. P-L DIRECTION START DETERMINATION
   THRESHOLD SETTING
3. L-P DIRECTION START DETERMINATION
   THRESHOLD SETTING TIMES K

67

P-L STOP
PREPARATION STATE

66

P-L
ASSIST STATE

P-L ASSIST
EXECUTION PROCESS

STOP EXECUTION
PROCESS
1. START
DETERMINATION
2. START
DETERMINATION
THRESHOLD
CALCULATION

65

STOP
STATE

68

L-P
ASSIST STATE

L-P ASSIST
EXECUTION PROCESS

69

L-P STOP
PREPARATION
STATE

L-P STOP STATE TRANSITION PROCESS
1. ASSIST STOP
2. L-P DIRECTION START DETERMINATION
   THRESHOLD SETTING
3. P-L DIRECTION START DETERMINATION
   THRESHOLD SETTING TIMES K

## FIG.19A

ASSIST IN P-L DIRECTION

SET FIRST THRESHOLD
(STEP S402)

P           STOP OPERATION ASSIST    R        N         D        L

START OPERATION ASSIST
IN P-L DIRECTION

FIRST
THRESHOLD

SECOND
THRESHOLD

K TIMES

SET SECOND THRESHOLD
(STEP S403)

## FIG.19B

SET FIRST THRESHOLD
(STEP S405)

K TIMES

FIRST
THRESHOLD

SECOND
THRESHOLD

START OPERATION ASSIST
IN L-P DIRECTION

L    STOP OPERATION ASSIST    D  SET SECOND THRESHOLD  N    R    P
                            (STEP S404)

ASSIST IN L-P DIRECTION

# FIG.20

SET FIRST THRESHOLD
(STEP S402)

STOP OPERATION
ASSIST

START OPERATION
ASSIST IN
P-L DIRECTION

TORQUE IN
P-L DIRECTION

TORQUE IN
L-P DIRECTION

$\gamma$

$\beta$

FIRST
THRESHOLD

SECOND
THRESHOLD

TORQUE VALUE < SECOND THRESHOLD
START OPERATION ASSIST IN L-P DIRECTION

| ASSIST STATE | P-L | | L-P | |
|---|---|---|---|---|

# FIG.21

SET FIRST THRESHOLD
(STEP S402)

STOP OPERATION
ASSIST

START OPERATION
ASSIST IN
P-L DIRECTION

FIRST
THRESHOLD

TORQUE IN
P-L DIRECTION

$\gamma$

TORQUE IN
L-P DIRECTION

$\beta$

SECOND
THRESHOLD

TORQUE VALUE > SECOND THRESHOLD

K TIMES

SET K-TIME SECOND THRESHOLD
(STEP S403)

ASSIST STATE | P-L

# FIG.22

# FIG.23

TORQUE VALUE < -THRESHOLD TORQUE VALUE > THRESHOLD

72
LP
ASSIST STATE
(LP-Assist)

70
STOP STATE
(Stop)

71
PL
ASSIST STATE
(PL-Assist)

STOP POSITION            STOP POSITION

TORQUE VALUE ≤ 0.2N·m AND
DUTY RATIO = 5%

## INTERNATIONAL SEARCH REPORT

| | International application No. |
|---|---|
| | PCT/JP2005/018811 |

A. CLASSIFICATION OF SUBJECT MATTER
*F16H61/28*(2006.01)

According to International Patent Classification (IPC) or to both national classification and IPC

B. FIELDS SEARCHED

Minimum documentation searched (classification system followed by classification symbols)
*F16H61/28*(2006.01), *B60K20/00*(2006.01)

Documentation searched other than minimum documentation to the extent that such documents are included in the fields searched
Jitsuyo Shinan Koho            1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-159279 A  (Kubota Corp.),<br>21 June, 1996 (21.06.96),<br>Par. Nos. [0015] to [0026]; Fig. 6<br>(Family: none) | 1-2,5,10-13 |
| A | Microfilm of the specification and drawings annexed to the request of Japanese Utility Model Application No. 14577/1990(Laid-open No. 105755/1991)<br>(Nissan Diesel Motor Co., Ltd.),<br>01 November, 1991 (01.11.91),<br>Pages 10 to 13; Fig. 5<br>(Family: none) | 1-2,5,10-13 |

☒   Further documents are listed in the continuation of Box C.        ☐   See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 December, 2005 (20.12.05) | 10 January, 2006 (10.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/018811 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-287126 A (Calsonic Kansei Corp.), 10 October, 2003 (10.10.03), Par. Nos. [0045] to [0048] (Family: none) | 1-2,5,10-13 |
| A | JP 2004-239291 A (Calsonic Kansei Corp.), 26 August, 2004 (26.08.04), Full text & EP 1443250 A2 | 1-2,5,10-13 |
| A | JP 2001-4023 A (Bosshu Bureki System Kabushiki Kaisha), 09 January, 2001 (09.01.01), Full text (Family: none) | 1-2,5,10-13 |

Form PCT/ISA/210 (continuation of second sheet) (April 2005)

## INTERNATIONAL SEARCH REPORT

| International application No. |
| --- |
| PCT/JP2005/018811 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   A common matter pertaining to Claims 1-2, 5, 10-13, Claims 3-4, Claims 6-8, Claim 9 is a structure (hereafter referred to as a common structure) related to "the input operating force detector detecting the operating force generated by the operation of the select lever, the assist actuator adding the assist force for assisting the operation of the select lever to the select lever, and the operation range selection mechanism starting the assistance of operation for the select lever by controlling the assist actuator when the value of the operational force detected by the input operation force detector is equal to or higher than the specified value and stopping the assistance of operation
   (continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-2, 5, 10-13

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

Form PCT/ISA/210 (continuation of first sheet (2)) (April 2005)

**INTERNATIONAL SEARCH REPORT**

International application No.

PCT/JP2005/018811

Continuation of Box No.III of continuation of first sheet(2)

when the operational force reaches the specified value or smaller.
However, the result of search reveals that the common structure is not novel since it is disclosed in Document 1: JP 8-159279 A (Kubota Corp.), 21 June, 1996 (21.06.96), Par. Nos. [0015]-[0026], Fig. 6, Document 2: Microfilm of the specification and drawings annexed to the request of Japanese Utility Model Application No. 14577/1990 (Laid-open No. 105755/1991) (Nissan Diesel Motor Co., Ltd.), 01 November, 1991 (01.11.91), pages 10-13, Fig. 5, and Document 3: JP 2003-287126 A (Calsonic Kansei Corp.), 10 October, 2003 (10.10.03), Par. Nos. [0045]-[0048].
Since the common structure makes no contribution over the prior art, the common matter pertaining to Claims 1-13 is not a special technical feature in the meaning of the second sentence of PCT Rule 13.2.
Since there is no other common matter considered to be a special technical feature in the meaning of the second sentence of PCT Rule 13.2, any technical relation in the meaning of PCT Rule 13 cannot be found among these different inventions. As a result, it is clear that Claims 1-13 do not fulfill the requirement of unity of invention.

Form PCT/ISA/210 (extra sheet) (April 2005)

**REFERENCES CITED IN THE DESCRIPTION**

**Patent documents cited in the description**

- JP 2003004135 A
- JP 2004298642 A

- JP 2004200086 A